# EUROPÄISCHE PATENTSCHRIFT

(11) **EP 3 549 193 B1**
(45) Veröffentlichungstag und Bekanntmachung des Hinweises auf die Patenterteilung: **09.09.2020**
(21) Anmeldenummer: 17801681.2
(22) Anmeldetag: 16.11.2017
(51) Int. Cl.: H01M 10/44, B60L 58/13, H01M 2/20, H02J 7/00, H01M 2/34, H01M 10/42, B60L 50/64

(54) **ENTLADEN VON EINEM WENIGSTENS ZWEI BATTERIEZELLEN AUFWEISENDEN BATTERIEMODUL EINER WENIGSTENS ZWEI BATTERIEMODULE AUFWEISENDEN BATTERIE**
DISCHARGING A BATTERY MODULE, HAVING AT LEAST TWO BATTERY CELLS, OF A BATTERY HAVING AT LEAST TWO BATTERY MODULES
DÉCHARGE D'UN MODULE DE BATTERIE COMPORTANT AU MOINS DEUX ÉLÉMENTS DE BATTERIE, D'UNE BATTERIE COMPORTANT AU MOINS DEUX MODULES DE BATTERIE

(30) Priorität: 02.12.2016 DE 102016224002
(43) Veröffentlichungstag der Anmeldung: 09.10.2019
(73) Patentinhaber: Audi AG, 85045 Ingolstadt (DE)
(72) Erfinder: HINTERBERGER, Michael, 85098 Großmehring (DE); HELLENTHAL, Berthold, 90596 Schwanstetten (DE); VASSEN, Heinz-Willi, 85114 Buxheim (DE); PILGRAM, Peter, 86633 Neuburg an der Donau (DE)
(74) Vertreter: Neuhausen, Marc-Alexander
(86) Internationale Anmeldenummer: PCT/EP2017/079468
(87) Internationale Veröffentlichungsnummer: WO 2018/099731

(56) Entgegenhaltungen:
- WO-A1-2013/131595
- DE-A1-102015 002 154

## Beschreibung

Die vorliegende Erfindung betrifft ein Verfahren zum Entladen von einem wenigstens zwei Batteriezellen aufweisenden Batteriemodul einer wenigstens zwei Batteriemodule aufweisenden Batterie, wobei die Batteriezellen eines jeweiligen der Batteriemodule benachbart zueinander angeordnet und mechanisch und elektrisch miteinander verbunden sind, wobei bei jedem der Batteriemodule die jeweiligen Batteriezellen einzeln mittels einer Zellenschalteinheit in einem ersten Schaltzustand der Zellenschalteinheit aktiviert und in einem zweiten Schaltzustand der Zellenschalteinheit deaktiviert werden. Die Erfindung betrifft ferner eine Entladeeinrichtung zum Entladen von einem wenigstens zwei Batteriezellen aufweisenden Batteriemodul einer wenigstens zwei Batteriemodule aufweisenden Batterie, wobei die Batteriezellen eines jeweiligen der Batteriemodule benachbart zueinander angeordnet und mechanisch und elektrisch miteinander verbunden sind, mit einer elektrischen Energieverbrauchseinheit zum Umwandeln von zugeführter elektrischer Energie in Wärme. Weiterhin umfasst die Erfindung eine Batterie mit zwei Batterieanschlusspolen und wenigstens zwei Batteriemodulen, wobei jedes der Batteriemodule jeweils zwei Modulanschlusspole aufweist, über die die Batteriemodule miteinander elektrisch verbunden und an die Batterieanschlusspole angeschlossen sind, wobei jedes der Batteriemodule wenigstens zwei benachbart zueinander angeordnete Batteriezellen aufweist, die mechanisch und elektrisch miteinander verbunden und an die jeweiligen Modulanschlusspole angeschlossen sind, wobei jedes der Batteriemodule eine mittels einer Steuereinheit steuerbare Zellenschalteinheit zum einzelnen Aktivieren der jeweiligen Batteriezellen in einem ersten Schaltzustand und zum einzelnen Deaktivieren der jeweiligen Batteriezellen in einem zweiten Schaltzustand umfasst. Schließlich umfasst die Erfindung auch ein Kraftfahrzeug mit einer elektrischen Antriebseinheit zum Antreiben des Kraftfahrzeugs sowie einer Batterie, die an die elektrische Antriebseinheit angeschlossen ist. Verfahren zum Entladen von Batteriemodulen, Entladevorrichtungen sowie Batterien und Kraftfahrzeuge der gattungsgemäßen Art sind im Stand der Technik umfänglich bekannt. Batterien der gattungsgemäßen Art finden neben stationären Anwendungen, wie beispielsweise bei unterbrechungsfreien Energieversorgungen, elektrische Energieversorgungen im Inselbetrieb und/oder dergleichen, auch bei Kraftfahrzeugen Einsatz, und zwar insbesondere bei elektrisch antreibbaren Kraftfahrzeugen, wie beispielsweise Elektrofahrzeugen, Hybridfahrzeugen oder dergleichen.

Eine Batterie der gattungsgemäßen Art dient dazu, elektrische Energie reversibel zu speichern. Eine solche Batterie wird auch als Akkumulator bezeichnet. Zum Zweck des reversiblen Energiespeicherns umfasst die Batterie in der Regel mehrere Batteriezellen, die als galvanische Zellen ausgebildet sind und elektrische Energie chemisch zu speichern vermögen. Zu diesem Zweck weist eine Batteriezelle in der Regel zwei Elektroden auf, die elektrochemisch miteinander in Verbindung stehen, beispielsweise über einen Elektrolyten, der mit den Elektroden wechselwirkt. An den Elektroden stellt sich dann eine elektrische Gleichspannung ein, die sich im Wesentlichen aufgrund der Elektrochemie ergibt. Die Gleichspannung, die sich zwischen den Elektroden einer einzelnen Batteriezelle einstellt, beträgt üblicherweise wenige Volt, beispielsweise etwa 1,2 Volt bis 4,5 Volt, abhängig von der Zellchemie.

Batterien der gattungsgemäßen Art sollen jedoch häufig hohe Gleichspannungen bereitstellen, beispielsweise bei elektrisch antreibbaren Kraftfahrzeugen eine Gleichspannung im Bereich von mehreren 100 Volt, beispielsweise etwa 400 Volt oder mehr, insbesondere etwa 800 Volt. Daraus ergibt sich, dass zur Realisierung solcher Gleichspannungen durch eine Batterie eine Vielzahl von Batteriezellen elektrisch in Reihe geschaltet werden müssen. Je nach Energie- beziehungsweise Leistungsbedarf kann ergänzend auch noch eine Parallelschaltung von Batteriezellen erforderlich sein.

Hieraus ergeben sich besondere Anforderungen insbesondere aus konstruktiver Sicht und aus Sicht der elektrischen Sicherheit, die bei derartigen Batterien, auch Hochvoltbatterien genannt, zu beachten sind. Aufgrund dieser Anforderungen ist es mittlerweise üblich, die Batterie nach Art einer Modulbauweise zu konstruieren. Zu diesem Zweck ist es üblich, eine Mehrzahl von galvanischen Zellen mechanisch und elektrisch zu einem Batteriemodul zusammenzufassen, sodass eine einzeln handhabbare Baueinheit bereitgestellt wird. Das Batteriemodul kann bezüglich seiner Eigenschaften, insbesondere in Bezug auf seine elektrischen Eigenschaften als eigenständige Baugruppe, geprüft werden. Die Batterie wird dann aus einer entsprechenden Mehrzahl solcher Batteriemodule zusammengefügt, beispielsweise indem die Batteriemodule in vorgegebener Weise mechanisch und/oder elektrisch miteinander, vorzugsweise zu einer Baueinheit, verbunden werden, beispielsweise indem sie in einem Batteriegehäuse der Batterie entsprechend angeordnet werden. Auch die Batteriemodule können eigene Gehäuse aufweisen, in denen die Batteriezellen angeordnet sind. Die Gehäuse können jedoch auch lediglich aus einem Rahmen bestehen, der bezüglich der Batterie die jeweiligen Batteriemodule fixiert beziehungsweise bezüglich des Batteriemoduls die jeweiligen Batteriezellen fixiert.

Zu diesem Zweck umfasst das Batteriemodul in der Regel zwei Modulanschlusspole, die batteriemodulseitig an die Batteriezellen elektrisch angeschlossen sind. Die Modulanschlusspole sind wiederum innerhalb der Batterie an Batterieanschlusspole angeschlossen, sodass an den Batterieanschlusspolen die gewünschte Gleichspannung der Batterie bereitgestellt werden kann. Infolgedessen ist in der Regel die Gleichspannung an den Batterieanschlusspolen größer als die Gleichspannung an den Modulanschlusspolen, welche wiederum in der Regel größer ist, als die Gleichspannung, die an den Elektroden der jeweiligen einzelnen Batteriezellen bereitgestellt wird. Liegt jeweils eine reine Parallelschaltung der Batteriezellen innerhalb eines Batteriemoduls beziehungsweise der Batteriemodule innerhalb der Batterie vor, sind die entsprechenden Gleichspannungen gleich groß.

Eine beispielhafte Konstruktion für ein Batteriemodul sieht vor, dass zwölf Batteriezellen in einem mechanischen Gehäuse angeordnet und elektrisch mittels Stromschienen miteinander in Reihe und/oder parallel angeschlossen sind. Vorzugsweise sind die Batteriezellen zueinander elektrisch isoliert angeordnet. Sie können darüber hinaus mittels einer Kühleinrichtung gekühlt werden. Solche Batteriemodule eignen sich dazu, als standardisierte Bauteile verwendet zu werden, sodass nahezu beliebige Batterien realisiert werden können, indem eine entsprechende Anzahl von Batteriemodulen miteinander in der Batterie vorgesehen werden.

Auch wenn sich diese Konstruktion im Stand der Technik bewährt hat, so zeigen sich dennoch Nachteile. Aufgrund der fortschreitenden Entwicklung erhöht sich die Energiedichte und/oder die Leistungsdichte der einzelnen Batteriezellen kontinuierlich. Unter anderem können die zum Einsatz kommenden Zellchemien deshalb auch immer aggressiver sein. Dadurch besteht die Gefahr, dass im Fehlerfall gefährliche Zustände, wie zum Beispiel durch einen zelleninternen Kurzschluss, erheblich verstärkt werden und die Sicherheit, insbesondere die elektrische Sicherheit und der Brandschutz, beeinträchtig sein können. Dies erfordert einen zusätzlichen Aufwand, der üblicherweise entsprechende Kosten und komplexe technische Maßnahmen zur Folge hat. Darüber hinaus besteht das Problem, dass aufgrund kurzer Entwicklungszeitvorgaben Batteriezelltechnologien teilweise noch nicht ausgereift in den Markt gelangen. Werden solche Batteriezellen zu Batteriemodulen und dann weiter zu entsprechenden Batterien verarbeitet, potenzieren sich die entsprechenden vorgenannten Risiken.

Ein weiteres Problem tritt in Bezug auf eine Schnellladung der Batterie auf, wenn sie zum Beispiel mit einer Leistung von etwa 150 bis 300 Kilowatt erfolgt, um sämtliche Batteriezellen wieder aufzuladen. Die Energiezufuhr erfolgt in einem vergleichsweise kurzen Zeitraum, der 30 Minuten unterschreiten kann. Dadurch können sämtliche Batteriezellen einem hohen Stress ausgesetzt sein, was eine hohe Alterung und eine hohe Wärmefreisetzung zur Folge haben kann.

Darüber hinaus besteht natürlich in Bezug auf Batteriezellen die Gefahr, dass es bei einer Störung irgendeiner Art zu sehr heftigen Reaktionen in und um die jeweilige Batteriezelle herum kommen kann, weil die in der Batteriezelle gespeicherte Energie in kurzer Zeit freigesetzt werden kann. Dieses Problem kann zum Beispiel bei einem thermischen Davonlaufen (thermal run-away), bei internen und/oder externen Kurzschlüssen der Batteriezellen, bei Mikrokurzschlüssen, bei Fremdpartikeln, bei Inhomogenitäten, bei Alterungseffekten, bei Plating, bei mechanischen Deformierungen, bei einem Unfall, bei Undichtigkeiten, insbesondere durch Diffusion von Feuchtigkeit in die Batteriezellen und so weiter auftreten.

Diesbezüglich offenbart die DE 10 2013 204 539 A1 eine Batteriezelleinrichtung mit Feinschlusssicherheitsfunktion und ein Verfahren zum Überwachen einer Batteriezelle. Diese Lehre berücksichtigt allein eine einzelne Batteriezelle einer Traktionsbatterie. Nachbarzellen, die gegebenenfalls beeinträchtigt sein können, werden durch diese Lehre nicht berücksichtigt. Darüber hinaus offenbart die DE 2013 206 191 A1 ein Entladen einer Batteriezelle durch Kurzschließen mittels eines Bimetalls. Der Bimetall ist thermisch an die Batteriezelle gekoppelt. Wird eine vorgegebene Temperatur durch die Batteriezelle im Bereich des Bimetalls erreicht, öffnet dieser einen Kontakt, woraufhin die Batteriezelle mittels des Bimetall-Schaltkontakts abgeschaltet wird.

Weiterhin offenbaren die DE 10 2014 205 116 A1 eine Batteriezelleinrichtung mit einer Batteriezelle und einer Strombegrenzungsschaltung sowie ein Verfahren zum Begrenzen eines über die Batteriezelle und die Batteriezellanschlüsse der Batteriezelle fließenden Stromes sowie die EP 2 355 229 A1 ein Hochstrombatteriesystem und ein Verfahren zu dessen Steuerung.

Bei einem Fehler, wie er zuvor anhand von Beispielen erläutert ist, kann sich folgender Ablauf in Bezug auf eine Batterie einstellen:
Zuerst führt die in der Batteriezelle gespeicherte elektrische Energie im Fehlerfall zu einer hohen Wärmeentwicklung. Diese Wärmeentwicklung tritt zunächst lokal begrenzt innerhalb der Batteriezelle auf. Der Fehlerfall kann beispielsweise verursacht sein durch einen internen Mikrokurzschluss, ein Eindringen eines Fremdkörpers, durch einen Unfall, beim Durchstoßen eines Separators, bei Dendriten-Bildung und/oder dergleichen. Dabei können sehr große Energiemengen in einem sehr kleinen Raum freigesetzt werden, wodurch sich ein hoher Temperaturanstieg ergeben kann. Dies ist unter anderem einer entsprechend hohen Stromdichte im Bereich der Fehlerstelle geschuldet. Infolgedessen kann sich auch der Druck innerhalb der Batteriezelle erhöhen, sofern ein Batteriezellegehäuse keine entsprechende Entlastungsmöglichkeit vorsehen sollte. Wird eine entsprechend hohe Temperatur erreicht, beispielsweise mehr als 150° C, kann es zu einem chemischen Lawineneffekt kommen. In der Folge kann es zur Freisetzung der chemisch gespeicherten Energie in Form einer exothermen Reaktion kommen, die insbesondere einen Brand zur Folge haben kann. Zugleich kann ein weiterer Druckanstieg innerhalb der geschlossenen Batteriezelle erfolgen, sofern sie nicht schon beschädigt wurde. Bei Überschreiten eines Druckschwellwertes kann es zum schlagartigen Aufbrechen des Batteriezellengehäuses beziehungsweise zum Ausgasen von Inhaltsstoffen der Batteriezelle in die Umgebung kommen. Dabei können zündfähige oder auch bereits brennende Gemische freigesetzt werden.

Das vorbeschriebene Szenario kann bei einer Batterie, bei der eine Vielzahl von Batteriezellen zusammen auf engstem Raum angeordnet sind, zu Propagationseffekten führen, die dazu führen können, dass eine Vielzahl von weiteren Batteriezellen in das Szenario einbezogen werden. Im ungünstigsten Fall kann die gesamte Batterie brennen. Dabei ziehen die Ereignisse der betroffenen Batteriezelle im vorhergehenden Szenario räumlich benachbarte Batteriezellen nach Art einer Kettenreaktion in Mitleidenschaft, wobei diese in Mitleidenschaft gezogenen Batteriezellen ebenfalls zu entsprechenden Reaktionen angeregt werden können.

Darüber hinaus kann in einem solchen Szenario bei parallelgeschalteten Batteriezellen der Fall auftreten, dass zusätzliche elektrische Energie von nicht betroffenen Batteriezellen in die fehlerhafte Batteriezelle überführt wird, sodass das Fehlerszenario dort weiter verschärft wird. So können zum Beispiel bei vier parallelgeschalteten Batteriezellen zum Beginn des Auftretens eines Fehlers in einer der Batteriezellen die drei weiteren Batteriezellen zusätzlich Energie in die fehlerhafte Batteriezelle einspeisen, beispielsweise wenn in der fehlerhaften Batteriezelle ein interner Kurzschluss auftreten würde. Im Falle eines Kurzschlusses können in einer einzelnen Batteriezelle große Kurzschlussströme auftreten, beispielsweise in einem Bereich von etwa 3 bis 5 kA, insbesondere als Funktion des Zelltyps der jeweiligen Batteriezelle. In dem vorbeschriebenen Fall der Parallelschaltung könnten dann neben dem durch die fehlerhafte Batteriezelle bereitstellbaren Kurzschlussstrom ergänzende entsprechende Kurzschlussströme hinzukommen, sodass es bei dem vorgenannten Beispiel zu einem Kurzschlussstrom im Bereich der Fehlerstelle von beispielsweise etwa 12 bis 15 kA kommen kann. Die Fehlerstelle braucht dabei anfangs lediglich nur so groß wie die Spitze einer Stecknadel zu sein oder auch kleiner.

Die Erfindung befasst sich mit der Aufgabe, die Sicherheit bei Batterien sowie Batteriemodulen zu verbessern.

Als Lösung schlägt die Erfindung ein Verfahren, eine Entladeeinrichtung, eine Batterie sowie ein Kraftfahrzeug gemäß den unabhängigen Ansprüchen vor.

Weitere vorteilhafte Ausgestaltungen ergeben sich anhand von Merkmalen der abhängigen Ansprüche.

Verfahrensseitig wird für ein gattungsgemäßes Verfahren insbesondere vorgeschlagen, dass die Batteriezellen des zu entladenden Batteriemoduls nacheinander mit einer Entladeeinrichtung mittels der Zellenschalteinheit ausgehend von einer vorgegebenen der Batteriezellen selektiv elektrisch gekoppelt werden, um die Batteriezellen zum Entladen des Batteriemoduls einzeln nacheinander elektrisch zu entladen.

Bezüglich einer gattungsgemäßen Entladeeinrichtung wird insbesondere vorgeschlagen, dass die elektrische Energieverbrauchseinheit ausgebildet ist, genau eine einzelne der Batteriezellen des zu entladenden Batteriemoduls der Batterie zu entladen.

Bezüglich einer gattungsgemäßen Batterie wird insbesondere vorgeschlagen, dass die Steuereinheit ausgebildet ist, zum Entladen von einem der Batteriemodule dessen Batteriezellen ausgehend von einer vorgegebenen der Batteriezellen mittels der Zellenschalteinheit nacheinander mit einer Entladeeinrichtung selektiv elektrisch zu koppeln, um die Batteriezellen zum Entladen des Batteriemoduls einzeln nacheinander elektrisch zu entladen.

Kraftfahrzeugseitig wird für ein gattungsgemäßes Kraftfahrzeug insbesondere vorgeschlagen, dass die Batterie gemäß der Erfindung ausgebildet ist.

Die Erfindung basiert auf der Erkenntnis, dass eine Batterie, die - wie eingangs ausgeführt - eine hochkomplexe Baugruppe bildet, mittels eines Überwachungssystems überwacht, ob an den jeweiligen Batteriezellen der Batteriemodule Fehler auftreten. Wird ein entsprechender Fehlerzustand ermittelt, kann unverzüglich eine geordnete Entladung des betroffenen Batteriemoduls eingeleitet werden, sodass für ein Fortschreiten des Fehlerzustands nach Möglichkeit keine oder nur eine geringe Energie zur Verfügung steht. Vorzugsweise ist das Batteriemodul vollständig entladen, sodass ein gefährlicher Zustand für die Batterie insgesamt, das heißt, unter anderem auch für weitere Batteriemodule und weitere Batteriezellen, im Wesentlichen vermieden werden kann. Mit der Erfindung können somit auch Propagationseffekte reduziert oder sogar vermieden werden. Damit dies erreicht werden kann, schlägt die Erfindung ein geordnetes Entfernen der in dem Batteriemodul gespeicherten elektrischen Energie vor.

Dabei nutzt die Erfindung, dass jedes der Batteriemodule eine mittels einer Steuereinheit steuerbare Zellenschalteinheit aufweist, die zum einzelnen Aktivieren der jeweiligen Batteriezellen in einem ersten Schaltzustand und zum einzelnen Deaktivieren der jeweiligen Batteriezellen in einem zweiten Schaltzustand dient. Bei jedem der Batteriemodule kann somit jede einzelne der Batteriezelle bedarfsweise aktiviert oder deaktiviert werden. Dabei meint Aktivieren der Batteriezelle, dass diese in eine elektrische Verschaltung der Batteriezellen innerhalb des Batteriemoduls aktiv gekoppelt ist, sodass sie im bestimmungsgemäßen Betrieb die gewünschte Energiespeicherfunktion bereitzustellen vermag. Bei parallelgeschalteten Batteriezellen kann dies dadurch erreicht werden, dass die Zellenschalteinheit für jede der Batteriezellen ein eigenes Schaltelement aufweist, welches jeweils in Reihe zu der jeweiligen Batteriezelle geschaltet ist. Ist das Schaltelement im geöffneten Zustand, ist die Batteriezelle deaktiviert, wohingegen die Batteriezelle aktiviert ist, wenn das Schaltelement im geschlossenen Zustand ist. Liegt dagegen eine reine Reihenschaltung vor, kann ergänzend eine Bypass-Schaltung für jede der Batteriezellen vorgesehen sein, sodass die jeweilige Batteriezelle mittels eines ersten Schaltelements von den anderen Batteriezellen elektrisch getrennt wird und zugleich mittels eines zweiten Schaltelements eine Bypass-Schaltung aktiviert wird, die die verbleibenden Batteriezellen elektrisch miteinander verbindet. Dadurch kann der Gesamtbetrieb des Batteriemoduls weiter aufrecht erhalten werden. Aber auch für die Erfindung erweist sich die Bypass-Schaltung in diesem Fall als vorteilhaft, weil nämlich die anderen in Reihe geschalteten Batteriezellen deaktiviert werden können, und die betroffene fehlerhafte Batteriezelle über eine Reihenschaltung der jeweiligen Bypass-Schaltungen der anderen Batteriezellen über Modulanschlusspole des Batteriemoduls selektiv entladen werden kann, wie sich im Folgenden noch weiter ergeben wird.

Durch die Erfindung ist ein geordnetes und in Bezug auf die Sicherheit optimiertes Entladen des Batteriemoduls möglich, sodass eine Gefährdung weiterer Batteriemodule oder auch der Batterie insgesamt weitgehend vermieden werden kann. Ein entladenes Batteriemodul kann im weiteren Verlauf bei einer Wartung oder dergleichen ausgetauscht werden, sodass die Batterie wieder ihren voll funktionsfähigen Zustand erreichen kann.

Kombiniert werden kann die Erfindung vorteilhaft mit der Entladeeinrichtung nach Art einer Überwachungseinrichtung, durch die ein intelligentes Früherkennungssystem nach Art eines Smart-Safety-Detection-Systems (SSDS) in Kombination mit der Entladeeinrichtung der Erfindung, welches als Smart-Power-Dissipation-Unit (SPDU) ausgebildet sein kann, erreicht werden kann. Vorzugsweise weist die Entladeeinrichtung eine Steuereinheit auf, die mit wenigstens einer der Zellenschalteinheiten in Kommunikationsverbindung steht, sodass zum Zwecke des Entladens einer Zelle eines Batteriemoduls ein entsprechender Schaltzustand eingestellt werden kann. Die Erfindung basiert also darauf, dass Batteriezellen des Batteriemoduls einzeln schaltbar sind und gegebenenfalls mit einer Bypass-Funktion ausgerüstet sind. Dadurch kann ein möglicher Fehler mit einer großen Wahrscheinlichkeit sehr frühzeitig erkannt werden, sodass gefährliche Zustände reduziert oder sogar vollständig vermieden werden können. Dabei sollte beachtet werden, dass eine Entladung sämtlicher Batteriezellen des Batteriemoduls zur gleichen Zeit zusätzliche Probleme und Belastungen verursachen kann. Eine Entladung der Zellen führt nämlich dazu, dass die in sämtlichen Batteriezellen gespeicherte Energie des Batteriemoduls gleichzeitig abgeführt werden muss. Eine entsprechende Entladeeinrichtung muss deshalb entsprechend groß ausgebildet sein. Darüber hinaus ist zu beachten, dass auch bei der Entladung einer Batteriezelle zusätzliche Verluste anfallen können. Dies erweist sich insbesondere dann als nachteilig, wenn dadurch ergänzende Wirkungen wie Temperaturerhöhung, Druckerhöhung und/oder dergleichen auf die fehlerhafte Batteriezelle einwirken können. Dadurch kann der Fehlerzustand weiter verschärft werden.

Daran zeigt sich, dass in Bezug auf die Sicherheit ein geordnetes Entladen des Batteriemoduls neben einer möglichst frühen Erkennung eines Fehlers einer Batteriezelle wesentlich ist.

Die Zellenschalteinheit kann als separate Schalteinheit im Batteriemodul vorgesehen sein. Es kann aber auch vorgesehen sein, dass die Zellenschalteinheit auf die jeweiligen Batteriezellen verteilt ist, insbesondere entsprechende Anteile der Zellenschalteinheit in die jeweiligen Batteriezellen integriert sind. Die Zellenschalteinheit kann Schaltelemente umfassen, um die gewünschte Schaltfunktion realisieren zu können. Die Schaltelemente können durch elektromechanische Schaltelemente wie Schütz- oder Relaiskontakte, aber auch durch Halbleiterschaltelemente wie Transistoren, insbesondere Feldeffekttransistoren, vorzugsweise Metalloxyd Field Effect Transistoren (MOSFET), Isolated Gate Bipolar Transistoren (IGBT), aber auch durch Gate-Turn-Off-Thyristoren (GTO) und/oder dergleichen gebildet sein. Diese Schaltelemente sind vorzugsweise ebenfalls in den jeweiligen Batteriezellen integriert angeordnet.

Darüber hinaus ist die Steuereinheit vorgesehen, die an die Zellenschalteinheit angeschlossen ist. Die Zellenschalteinheit kann zu diesem Zweck eine oder mehrere Kommunikationsschnittstellen aufweisen, über die sie mit der Steuereinheit in Kommunikationsverbindung steht. Die Kommunikationsschnittstellen können beispielsweise leitungsgebunden oder auch drahtlos ausgebildet sein. Eine drahtlose Ausgestaltung kann zum Beispiel auf Funk, insbesondere Nahfunk, basieren. Vorzugsweise weist jede der Batteriezellen eine eigene Kommunikationsschnittstelle auf, mittels der sie mit der Steuereinheit in Kommunikationsverbindung steht. Vorzugsweise ist die batteriezellenseitige Kommunikationsschnittstelle an einen jeweils integrierten Teil der Zellenschalteinheit angeschlossen. Dadurch kann mittels der Steuereinheit die Aktivierung beziehungsweise Deaktivierung einer jeweiligen Batteriezelle des jeweiligen Batteriemoduls gesteuert werden.

Die Steuereinheit selbst kann als separate Baueinheit vorgesehen sein. Vorzugsweise ist sie jedoch Bestandteil der Batterie. Insbesondere kann sie natürlich auch Bestandteil der Batteriemodule sein, wobei beispielsweise jedes Batteriemodul eine eigene Steuereinheit aufweisen kann. Diese eigenen Steuereinheiten der Batteriemodule können untereinander wiederum in Kommunikation stehen. Darüber hinaus kann auch eine übergeordnete Steuereinheit vorgesehen sein.

Besonders vorteilhaft erweist es sich, wenn die Batteriezellen Zellensensoren aufweisen, die dazu ausgebildet sind, wenigstens einen jeweiligen Zellenzustand der jeweiligen Batteriezelle zu erfassen. Sind die Batteriezellen kommunikationstechnisch mit der Steuereinheit in Kommunikationsverbindung, kann der jeweils erfasste Zustandswert an die Steuereinheit zur weiteren Verarbeitung übermittelt werden. Hierdurch kann ein Überwachen der jeweiligen Batteriezellen erreicht werden, indem die Steuereinheit den jeweiligen erfassten Zellenzustand überwacht.

Derartige Batteriemodule, auch Smart-Safety-Module genannt, können zu einer Batterie zusammengeschaltet sein. Die Batteriezellen, die sowohl anteilig integriert eine Zellenschalteinheit als auch wenigstens einen Zellensensor aufweisen und mit der Steuereinheit in Kommunikationsverbindung gebracht werden können, werden auch Smart Cells genannt.

Die Batteriezellen eines Batteriemoduls sind benachbart zueinander angeordnet und mechanisch und elektrisch miteinander verbunden. Vorzugsweise wird hierdurch eine Baueinheit des Batteriemoduls gebildet. Es kann hierfür ein Batteriemodulgehäuse oder -rahmen vorgesehen sein.

In einer vorteilhaften Weiterbildung wird vorgeschlagen, dass zumindest die Batteriezellen des zu entladenden Batteriemoduls der Batterie mittels der Zellenschalteinheit vor einem Beginn des Entladens deaktiviert werden. Dadurch kann erreicht werden, dass die Energiespeicherfunktion des zu entladenden Batteriemoduls in Gänze deaktiviert wird, sodass eine Verschärfung eines etwaigen Fehlerzustands einer jeweiligen der Batteriezellen des Batteriemoduls durch Zuführung von elektrischer Energie von extern weitgehend vermieden werden kann. Darüber hinaus kann erreicht werden, dass sichergestellt werden kann, dass nicht durch die weiteren Batteriezellen des Batteriemoduls elektrische Energie der vorgegebenen der Batteriezellen zugeführt wird, um beispielsweise einen Fehlerzustand dieser Batteriezelle zu verschärfen. Zu diesem Zweck kann vorgesehen sein, dass mittels der Zellenschalteinheit vorzugsweise sämtliche der Batteriezellen deaktiviert werden. Diese Funktion kann auf das zu entladende Batteriemodul beschränkt sein. Es kann jedoch auch vorgesehen sein, dass weitere Batteriemodule der Batterie in diese Funktion einbezogen werden, insbesondere solche Batteriemodule, die unmittelbar benachbart zum zu entladenden Batteriemodul angeordnet sind. Dadurch kann die Sicherheit der Batterie und der Batteriemodule weiter verbessert werden.

Gemäß einer Weiterbildung wird vorgeschlagen, dass für die Batteriezellen des Batteriemoduls jeweils ein Zustandswert für einen Zellenzustand erfasst wird, für die erfassten Zustandswerte ermittelt wird, ob sie in einem vorgegebenen Wertebereich sind, und eine Batteriezelle, deren erfasster Zustandswert außerhalb des Wertebereichs ist, als die vorgegebene Batteriezelle ermittelt wird. Diese Ausgestaltung berücksichtigt, dass die Batteriezellen des Batteriemoduls hinsichtlich zumindest eines Zellenzustands überwacht werden können. Zu diesem Zweck kann vorgesehen sein, dass das Batteriemodul, insbesondere jede der Batteriezellen des Batteriemoduls, einen oder mehrere Sensoreinheiten aufweist, die dazu dienen, den wenigstens einen Zellenzustand zu erfassen. Die erfassten Zustandswerte können an die Steuereinheit, insbesondere wenn die Steuereinheit eine batteriemodulbezogene Steuereinheit ist, übermittelt werden. Die Steuereinheit kann die Prüfungsfunktion vornehmen und für die erfassten Zustandswerte ermitteln, ob sie in einem vorgegebenen Wertebereich sind. Fällt wenigstens einer der Zustandswerte aus dem vorgegebenen Wertebereich, kann die Steuereinheit die Batteriezelle, deren erfasster Zustandswert außerhalb des Wertebereichs ist, als vorgegebene Batteriezelle ermitteln und definieren. Das Entladen kann dann mit dieser Batteriezelle gestartet werden. Das hat den Vorteil, dass die Batteriezelle, bei der ein fehlerhafter oder gestörter Zustand vorliegt, zuerst entladen wird, um Auswirkungen des fehlerhaften Zustands dieser Batteriezelle beziehungsweise des gestörten Zustands dieser Batteriezelle möglichst klein halten zu können. Dadurch, dass diese Batteriezelle als erste entladen wird, kann somit die Sicherheit insgesamt weiter erhöht werden.

Sind die Zustandswerte von zwei oder mehreren der Batteriezellen des Batteriemoduls außerhalb des Wertebereichs, können weitere Kriterien hinzugezogen werden, um die vorgegebene Batteriezelle, die zuerst entladen werden soll, zu ermitteln. Beispielsweise kann dies die erste der in der Bearbeitungsreihenfolge auftretenden Batteriezellen sein. Es kann aber auch eine Batteriezelle sein, bei der der Zustandswert weiter außerhalb des Wertebereichs ist, als der Zustandswert der anderen Batteriezellen des Batteriemoduls. Darüber hinaus kann auch vorgesehen sein, dass zuerst eine räumlich möglichst zentrisch angeordnete Batteriezelle entladen wird, um die Sicherheit weiter zu verbessern.

Ein Zellenzustand kann beispielsweise eine Zellentemperatur, ein Zellendruck, eine Zellenspannung, ein Zellenstrom, ein Impuls bei einem der vorgenannten Zustandswerte, ein Ergebnis einer Impedanzspektroskopie und/oder dergleichen sein. Insbesondere können die erfassten Zustandswerte einer Datenanalyse unterzogen werden, vorzugsweise ausgeführt von der Steuereinheit. Die Steuereinheit kann hierzu eine entsprechende Datenanalyseeinrichtung umfassen, die eine Hardwareschaltung umfassen kann, die ihrerseits zum Beispiel eine Rechnereinheit umfasst. Die Rechnereinheit kann ferner eine Speichereinheit umfassen, in der ein ablauffähiges Rechnerprogramm sowie auch Daten gespeichert sind. Mittels des Rechnerprogramms kann die Rechnereinheit die gewünschte Analysefunktion bereitstellen. Insbesondere kann dadurch erreicht werden, dass Trends und/oder Prognosen der Zellenzustände, insbesondere unter Berücksichtigung einer Historie der Zellenzustände, ermittelt werden können. Dadurch kann eine mögliche Folge vorzugsweise rechtzeitig vorhergesagt werden, beispielsweise nach Art eines Forecast. Dadurch kann Zeit für eine rechtzeitige Reaktion gewonnen werden, sodass ein gefährlicher Zustand der Batterie oder eines seiner Batteriemodule weitgehend vermieden werden kann. Insbesondere kann rechtzeitig die erfindungsgemäße Entladung des betroffenen Batteriemoduls eingeleitet werden, sodass Auswirkungen auf die Batterie insgesamt und deren bestimmungsgemäßen Betrieb weitgehend reduziert werden können. Durch geeignete Anwendung kann darüber hinaus erreicht werden, dass das betroffene Batteriemodul hinsichtlich seiner Energiespeicherfunktion deaktiviert wird, sodass mit den übrigen Batteriemodulen ein Weiterbetrieb der Batterie zumindest hilfsweise erreicht werden kann.

Dadurch können sicherheitsrelevante Aspekte in Bezug auf die Batterie und die Batteriemodule deutlich verbessert werden.

Ist die Steuereinheit Bestandteil eines Batteriemoduls, kann sie als Rechnereinheit beispielsweise einen Cell-Modul-Controller (CMC) umfassen. Dieser kann auf einer Leiterplatte angeordnet sein, die vom Batteriemodul umfasst ist. Je nach Ausstattung kann der CMC direkt in das Batteriemodul integriert sein. Er kann aber auch außerhalb des Batteriemoduls an einer geeigneten Stelle angeordnet sein. Vorteilhaft kann in diesem Fall vorgesehen sein, dass der CMC gleichzeitig mehrere Batteriemodule zu steuern vermag. Vorzugseise überwacht der CMC sämtliche Batteriezellen des ihm zugeordneten Batteriemoduls beziehungsweise der ihm zugeordneten Batteriemodule. Er kann die Batteriezellen darüber hinaus kontrollieren und auch balancieren. Zudem können Zellenzustände innerhalb eines jeweiligen Batteriemoduls erfasst werden, indem das CMC-Modul entsprechende Steuerbefehle an die jeweiligen Sensoreinheiten der Batteriemodule beziehungsweise Batteriezellen abgibt. Die Sensoreinheiten können dann entsprechende Zustandswerte zurückliefern. Die Auswertung und Berechnung sämtlicher Informationen im Rahmen der Datenanalyse kann beispielsweise mittels eines Mikrocontrollers erfolgen, der beispielsweise als Halbleiterchip ausgebildet ist und auf der Leiterplatte direkt aufgebondet sein kann. Mit den Batteriezellen sowie der Zellenschalteinheit und den etwaigen Sensoreinheiten kann die Rechnereinheit über ein BUS-System wie zum Beispiel einen CAN-BUS in Kommunikationsverbindung stehen und dadurch sämtliche relevanten Daten abrufen beziehungsweise Parameter und Steuerbefehle übermitteln. Der CMC kann darüber hinaus mit einem übergeordneten Batteriemanagementsystem (BMS) in Kommunikationsverbindung stehen.

Aus der Datenanalyse können auch auffällige Verhaltensmuster ermittelt werden, zu welchem Zweck eine gemeinsame Analyse der Batteriezellen wenigstens eines Batteriemoduls hinzugezogen werden kann. Zu diesem Zweck können intelligente Algorithmen, beispielsweise Big-Data-Analyse-Algorithmen, künstliche Intelligenz (KI), lernfähige Systeme und/oder dergleichen genutzt werden.

Vorzugsweise wird das Entladen durch das Ermitteln der vorgegebenen Batteriezelle gestartet. Wird nämlich eine Batteriezelle, wie zuvor erläutert, ermittelt, kann angenommen werden, dass diese einen gestörten Zustand oder einen fehlerhaften Zustand aufweist. Das entsprechende Batteriemodul sollte deshalb vorzugsweise unverzüglich deaktiviert und entladen werden. Wenn das Ermitteln von Zellenzuständen kontinuierlich oder zu vorgebbaren Zeitpunkten wiederholt durchgeführt wird, kann somit eine im Wesentlichen dauerhafte Überwachung der Batteriezellen erreicht werden. Wird ein Zustandswert einer jeweiligen Batteriezelle als außerhalb des Wertebereichs erkannt, kann somit automatisch der erfindungsgemäße Entladungsvorgang vorgenommen werden. Es bedarf daher keiner weiteren insbesondere manuellen Eingriffe.

Eine weitere Ausgestaltung der Erfindung schlägt vor, dass bei einem mehr als zwei Batteriezellen aufweisenden Batteriemodul eine Reihenfolge des Entladens der Batteriezellen unter Berücksichtigung eines räumlichen Abstands der Batteriezellen zur vorgegebenen Batteriezelle festgelegt wird. Besonders vorteilhaft erweist sich diese Ausgestaltung dann, wenn zunächst zur vorgegebenen Batteriezelle räumlich benachbart angeordnete Batteriezellen vor anderen Batteriezellen entladen werden. Dadurch kann der Ort einer möglichen Fehlerquelle energietechnisch zuvorderst entschärft werden. Die Sicherheit lässt sich hierdurch weiter erhöhen. Diese Ausgestaltung berücksichtigt, dass die vorgegebene Batteriezelle in der Regel auch eine schadhafte Batteriezelle ist, die häufig thermisch und mechanisch besonders beansprucht ist und räumlich benachbarte Batteriezellen meist zuerst beeinträchtigt. Um die Ausbreitung eines gefährlichen Zustands zu reduzieren, werden deshalb nach der vorgegebenen Batteriezelle vorzugsweise die unmittelbar benachbarten Batteriezellen als nächste entladen. Erst danach werden die weiteren Batteriezellen des Batteriemoduls entladen, die möglicherweise hinsichtlich ihres Sicherheitszustands noch unkritisch sein können. Dadurch kann die Sicherheit insgesamt weiter verbessert werden.

Natürlich kann die Reihenfolge des Entladens der Batteriezellen ergänzend auch abhängig von der erfassten Zustandsgröße der Batteriezellen in Bezug auf den vorgegebenen Wertebereich festgelegt werden. Diese Ausgestaltung berücksichtigt, dass anhand der erfassten Zustandsgröße in Bezug auf den vorgegebenen Wertebereich ein Gefährdungspotential der jeweiligen Batteriezelle bewertet werden kann. Es kann daher zunächst die Batteriezelle nach der vorgegebenen Batteriezelle entladen werden, die das verbleibende größte Gefährdungspotential aufweist.

Gemäß einer weiteren Ausgestaltung wird vorgeschlagen, dass, wenn die Entladeeinrichtung an Batterieanschlusspole der Batterie angeschlossen ist, das zu entladende Batteriemodul mittels der Zellenschalteinheiten der Batteriemodule selektiv mit den Batterieanschlusspolen elektrisch gekoppelt wird. Dadurch braucht die Entladeeinrichtung nicht selbst selektiv an das jeweilige Batteriemodul angeschlossen zu sein. Es reicht aus, die Entladeeinrichtung selbst an die Batterieanschlusspole anzuschließen, um die erfindungsgemäße Entladungsfunktion realisieren zu können. Dies vereinfacht den Montage- und Anschlussaufwand. In diesem Fall sind natürlich die weiteren Batteriemodule, die neben dem zu entladenden Batteriemodul in der Batterie vorhanden sind, entsprechend zu deaktivieren, sodass mittels der jeweiligen Schalteinheiten der Batteriemodule erreicht wird, dass ausschließlich das zu entladende Batteriemodul an die Batterieanschlusspole angeschlossen ist. Dadurch kann sichergestellt werden, dass ausschließlich dieses Modul entladen wird. Die weiteren Batteriemodule brauchen vom Entladeverfahren der Erfindung nicht erfasst zu sein. Gleichwohl kann natürlich vorgesehen sein, dass mit dem erfindungsgemäßen Verfahren auch die weiteren Batteriemodule entladen werden, insbesondere wenn gewünscht ist, dass die Batterie insgesamt in den entladenen Zustand überführt wird.

Vorzugsweise erfolgt das Entladen einer jeweiligen der Batteriezellen des zu entladenden Batteriemoduls bis zu einem vorgegebenen unteren Ladungszustand. Der vorgegebene untere Ladungszustand ist vorzugsweise derart gewählt, dass der verbleibende Energieinhalt der jeweiligen Batteriezelle möglichst keinen gefährlichen Zustand mehr verursachen beziehungsweise unterstützen kann. Diese Ausgestaltung berücksichtigt, dass ein vollständiges Entladen der Batteriezelle häufig bereits aus zeitlichen Gründen unpraktikabel sein kann. Insbesondere wenn eine vollständige Entladung erreicht werden soll, sind Entladekurven zu berücksichtigen, gemäß denen eine Entladung im unteren Bereich des Ladungszustands einen entsprechenden Zeitaufwand erfordern kann. Es ist deshalb vorzugsweise der untere Ladungszustand derart gewählt, dass eine möglichst schnelle Entladung der Batteriezelle erreicht werden kann. Dabei wird eine gewisse Restladung der Batteriezelle in Kauf genommen.

Die Entladeeinrichtung ist gemäß der Erfindung so ausgebildet, dass die elektrische Energieverbrauchseinheit ausgebildet ist, genau eine einzelne der Batteriezellen des zu entladenden Batteriemoduls der Batterie zu entladen. Das hat den Vorteil, dass die Entladeeinrichtung einerseits sehr kompakt und leicht ausgebildet sein kann, sodass sie auf einfache Weise in eine elektrische Anlage, insbesondere in die Batterie beziehungsweise das jeweilige Batteriemodul integriert werden kann. Grundsätzlich kann die Entladeeinrichtung an einer beliebigen geeigneten Stelle, beispielswiese des Kraftfahrzeugs, angeordnet sein.

Vorzugsweise ist die Entladeeinrichtung Bestandteil des Batteriemoduls. Die Entladeeinrichtung kann die elektrische Energieverbrauchseinheit nach Art eines elektrischen Widerstands umfassen, der an eine geeignete Kühlfläche angekoppelt ist, mittels der eine entsprechende Wärmeleistung abgeführt werden kann. Dadurch, dass lediglich eine einzelne der Batteriezellen entladen zu werden braucht, kann die Entladeeinrichtung sehr kompakt ausgebildet sein. Würde sie nämlich gleichzeitig sämtliche Batteriezellen des Batteriemoduls entladen müssen, würde sie eine entsprechende Leistung und auch einen entsprechenden Bauraum benötigen und ein entsprechendes Gewicht erfordern. Dies ist insbesondere bei einem Einsatz in Kraftfahrzeugen unerwünscht. Mit der Erfindung kann deshalb die Entladeeinrichtung optimal zur Ausführung des erfindungsgemäßen Verfahrens angepasst sein. Vorzugsweise kann die Entladeeinrichtung (SPDU) deshalb eine eigene Schalteinheit umfassen oder auch an die Zellenschalteinheit des Batteriemoduls angeschlossen sein. Die Entladeeinrichtung kann darüber hinaus auch an Batterieanschlusspole angeschlossen sein. Mittels der Schalteinheit kann sie bedarfsgerecht aktiviert werden. Die Entladeeinrichtung steht vorzugsweise mit der Zellenschalteinheit in Kommunikationsverbindung, damit das gewünschte selektive Entladen einer einzelnen der Batteriezellen des Batteriemoduls erreicht werden kann.

Vorzugsweise ist vorgesehen, dass eine zu entladende Batteriezelle erst entladen wird und erst nach Erreichen des entladenen Zustands beziehungsweise des vorgegebenen unteren Ladungszustands die darauf folgende Batteriezelle entladen wird.

Es kann darüber hinaus für jedes Batteriemodul eine eigene Entladeeinrichtung vorgesehen sein. Um die bei der Entladung entstehende Wärme möglichst gut zu verteilen, können an geeigneter Stelle der Batteriemodule oder auch extern dazu entsprechende Kühleinrichtungen vorgesehen sein. Die Kühleinrichtungen können durch Kühlkörper gebildet sein, die mittels eines Kühlmittels wie Luft, Wasser, Öl oder dergleichen gekühlt werden können. Die Entladeeinrichtung kann ferner eine eigene Steuereinheit umfassen, mittels der der Entladevorgang steuerbar ist. Vorzugsweise ist das ihr zugeordnete Schaltmittel beziehungsweise Schaltelement mittels der Steuereinheit steuerbar. Darüber hinaus kann die Entladeeinrichtung eine Kommunikationsschnittstelle aufweisen, mittels der sie in Kommunikationsverbindung zur Steuereinheit des Batteriemoduls beziehungsweise der Batterie gebracht werden kann. Dadurch ist es möglich, die Entladeeinrichtung von der Steuereinheit aus entsprechend in geeigneter Weise zu steuern, sodass der Entladungsvorgang gemäß der Erfindung ausgeführt werden kann.

Ferner wird vorgeschlagen, dass die Entladeeinrichtung eine Wärmeabführfläche aufweist, die an der Batterie und/oder wenigstens einem seiner Batteriemodule angeordnet ist. Dadurch kann mit der Wärmeabführfläche die Wärme an vorgebbaren Stellen abgegeben werden. Diese Stellen können so gewählt sein, dass die freigesetzte Wärmeenergie möglichst gut verteilt abgegeben werden kann, um andere Bauteile thermisch möglichst nicht zu beeinträchtigen. Darüber hinaus kann natürlich auch vorgesehen sein, dass die Wärmeabführfläche genutzt wird, um eine Heizungsfunktion zu realisieren, beispielsweise ein Beheizen des Batteriemoduls beziehungsweise der Batterie, um eine für einen bestimmungsgemäßen Betrieb günstige Temperatur der Batteriezellen, des Batteriemoduls und/oder der Batterie insgesamt erreichen zu können. Diese Funktion erweist sich zum Beispiel im Winter als vorteilhaft, um die die Batterie beziehungsweise deren Komponenten auf eine Betriebstemperatur aufheizen zu können. Weiterhin kann auch vorgesehen sein, die Wärmeabführfläche als Smart-Power-Einrichtung, als Heizgerät für das Kraftfahrzeug, zum Beispiel nach Art eines PTC oder dergleichen zu nutzen, um ein Vorkonditionieren oder auch Vorwärmen realisieren zu können.

Die in Bezug auf das Verfahren der Erfindung und die Entladevorrichtung genannten Wirkungen und Vorteile gelten natürlich gleichermaßen für die Batterie gemäß der Erfindung und das mit der erfindungsgemäßen Batterie ausgestattete Kraftfahrzeug. Insofern wird diesbezüglich auf die vorangehenden Ausführungen ergänzend verwiesen.

Weitere Vorteile und Merkmale sind der folgenden Beschreibung von Ausführungsbeispielen anhand der beigefügten Figuren zu entnehmen. In den Figuren bezeichnen gleiche Bezugszeichen gleiche Merkmale und Funktionen.

### Es zeigen:

- Fig. 1: in einer schematischen Blockansicht eine Batterie mit drei Batteriemodulen, wobei jedes Batteriemodul jeweils sieben Batteriezellen umfasst, mit einer Steuereinheit und einer Entladeeinrichtung gemäß der Erfindung,
- Fig. 2: eine schematisch perspektivische Ansicht für die Batterie gemäß Fig. 1,
- Fig. 3: in einer schematisch perspektivischen Ansicht eines der Batteriemodule der Batterie gemäß Fig. 2 mit zwölf einzelnen Batteriezellen,
- Fig. 4: eine schematische Ansicht wie Fig. 3, wobei jedoch ergänzend ein Deckel mit einer Leiterplatte mit einer Zellenschalteinheit und einer Steuereinheit vorgesehen ist,
- Fig. 5: eine schematisch perspektivische Ansicht des Batteriemoduls gemäß Fig. 4, wobei ergänzend eine Kühlvorrichtung gemäß der Erfindung vorgesehen ist,
- Fig. 6: eine schematisch perspektivische Ansicht des Moduls gemäß Fig. 4 und 5 in einer Explosionsdarstellung,
- Fig. 7: ein schematisches Blockschaltbild für ein Batteriemodul der Batterie gemäß Fig. 1 im bestimmungsgemäßen Betrieb des Energiespeicherns,
- Fig. 8: eine schematische Darstellung gemäß Fig. 7, wobei an einer der Batteriezellen eine Störung auftritt,
- Fig. 9: eine schematische Darstellung wie Fig. 7, wobei die gestörte Batteriezelle als vorgegebene Batteriezelle erkannt wird und elektrisch an eine Entladeeinrichtung angeschlossen und entladen wird,
- Fig. 10: eine Darstellung wie Fig. 9, wobei nunmehr eine erste Nachbarzelle entladen wird,
- Fig. 11: eine Darstellung wie Fig. 9, wobei nunmehr die Batteriezellen entladen sind und das Batteriemodul deaktiviert ist,
- Fig. 12: eine Darstellung wie Fig. 11, wobei das Batteriemodul nunmehr entladen ist und sämtliche Batteriezellen des Batteriemoduls mittels einer jeweiligen Bypass-Schaltung gebrückt sind,
- Fig. 13: ein schematisches Blockschaltbild für eine zweite Ausgestaltung eines Batteriemoduls mit parallel und in Reihe geschalteten Batteriezellen im bestimmungsgemäßen Betrieb,
- Fig. 14: eine Störung an einer Batteriezelle des Batteriemoduls gemäß Fig. 13,
- Fig. 15: eine dritte Ausgestaltung gemäß der Erfindung basierend auf dem Batteriemodul gemäß Fig. 13, wobei eine andere Batteriezelle einen gestörten Zustand aufweist,
- Fig. 16: eine Entladung des Batteriemoduls gemäß Fig. 15 mit zwei parallelgeschalteten Entladeeinrichtungen gemäß der Erfindung,
- Fig. 17: in einem Diagramm eine schematische Darstellung eines Gefahrenpotentials von Batteriezellen in Abhängigkeit der gespeicherten Energie,
- Fig. 18: eine schematische Darstellung eines Batteriemoduls gemäß Fig. 1 mit unterschiedlich angeordneten Entladeeinrichtungen, und
- Fig. 19: eine schematische Darstellung der Batterie gemäß Fig. 1 mit einer gestörten Batteriezelle eines Batteriemoduls.

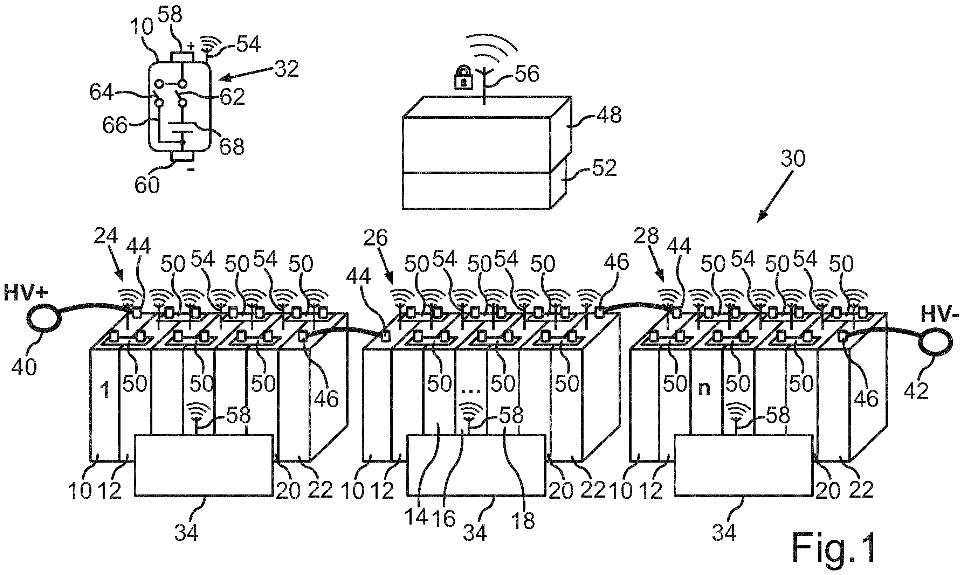

Fig. 1 zeigt in einer schematischen Blockansicht eine Batterie 30 mit zwei Batterieanschlusspolen 40, 42, wobei der Batterieanschlusspol 40 ein HV+-Potential und der Batterieanschlusspol 42 ein HV--Potential bereitstellt. Die Batterie 30 umfasst drei Batteriemodule 24, 26, 28, wobei jedes der Batteriemodule 24, 26, 28 jeweils zwei Modulanschlusspole 44, 46 aufweist. Die Modulanschlusspole 44 stellen vorliegend ein Pluspotential des jeweiligen der Batteriemodule 24, 26, 28 bereit, wohingegen die Modulanschlusspole 46 jeweils ein Minuspotential der jeweiligen Batteriemodule 24, 26, 28 bereitstellen. Über die Modulanschlusspole 44, 46 sind die Batteriemodule 24, 26, 28 miteinander elektrisch verbunden und an die Batterieanschlusspole 40, 42 angeschlossen.

Jedes der Batteriemodule 24, 26, 28 weist wenigstens zwei benachbart zueinander angeordnete Batteriezellen 10, 12, 14, 16, 18, 20, 22 auf, die mechanisch und elektrisch miteinander verbunden und an die jeweiligen Modulanschlusspole 44, 46 angeschlossen sind. Zu diesem Zweck sind entsprechende Stromschienen 50 vorgesehen.

Die elektrischen Verbindungen zwischen den Batteriemodule 24, 26, 28 innerhalb der Batterie 30 sind ebenfalls durch nicht bezeichnete Strombrücken ausgeführt.

Die Batterie 30 umfasst ferner eine Steuereinheit 48, die vorliegend als Smart-Cell-Controller (SCC) ausgebildet ist. Sie umfasst ein Smart-Safety-Detection-System 52. Dieses dient der Analyse von Daten, die der Steuereinheit 48 zugeführt werden. Vorliegend ist vorgesehen, dass sämtliche der Batteriezellen 10 bis 22 eine drahtlose Kommunikationsschnittstelle 54 umfassen. Alternativ oder Ergänzend kann natürlich auch eine leitungsgebundene, eine optische und/oder auch eine Power-Line-Kommunikation (PLC) vorgesehen sein. Entsprechend umfasst auch die Steuereinheit 48 eine drahtlose Kommunikationsschnittstelle 56. Vorliegend sind die Kommunikationsschnittstellen 54, 56 für Nahfunk ausgelegt. Als Kommunikationsprotokoll dient ein Protokoll gemäß dem WLAN-Standard. Dadurch stehen alle Batteriezellen 10, 12, 14, 16, 18, 20, 22 in Kommunikationsverbindung mit der Steuereinheit 48.

Im linken oberen Bereich ist schematisch stellvertretend für die Batteriezellen 10 bis 22 eine einzelne der Batteriezellen, nämlich die Batteriezelle 10, dargestellt. Daraus ist ersichtlich, dass die Batteriezelle 10 Batteriezellenanschlüsse 58, 60 umfasst, wobei der Batteriezelleanschluss 60 mit einer negativen Elektrode einer galvanischen Zelle 68 der Batteriezelle 10 elektrisch verbunden ist. Der Batteriezellenanschluss 58 ist hingegen über einen Halbleiterschalter 62, der in der Batteriezelle 10 integriert angeordnet ist und Teil einer Zellenschalteinheit 32 ist, an eine positive Elektrode der galvanischen Zelle 68 angeschlossen. Darüber hinaus umfasst die Batteriezelle 10 eine Bypass-Leitung 66, die mit einem Ende an den Batteriezelleanschluss 60 und mit ihrem anderen Ende über einen weiteren Halbleiterschalter 64 an den positiven Batteriezellenanschluss 58 angeschlossen ist. Mittels des Halbleiterschalters 64 ist es möglich, bei geöffnetem Halbleiterschalter 62, das heißt, die galvanische Zelle 68 ist hinsichtlich der Energiespeicherfunktion der Batteriezelle 10 deaktiviert, die Batteriezellenanschlüsse 58, 60 miteinander elektrisch nach Art eines Bypasses zu verbinden. Vorliegend sind die Batteriezellen 10 bis 22 der Batteriemodule 24, 26, 28 sämtlich nach dieser Art ausgebildet. Alternativ kann die Zellenschalteinheit 32 natürlich auch batteriezellenextern im jeweiligen der Batteriemodule 24, 26, 28 angeordnet sein, beispielsweise nach Art einer die Schaltelemente 62, 64 umfassenden Leiterplatte.

Ferner umfasst jede Batteriezelle 10 bis 22 die Kommunikationsschnittstelle 54, die an eine nicht weiter dargestellte interne Zellensteuereinheit angeschlossen ist, die ihrerseits mit ebenfalls nicht dargestellten Sensoreinheiten verbunden ist, mit denen Zellenzustände der jeweiligen Batteriezellen 10 bis 22 erfasst werden können. Vorliegend werden die Zellenzustände Temperatur, Druck, elektrische Spannung der galvanischen Zelle 68 sowie elektrischer Strom erfasst. Diese Daten werden über die Kommunikationsschnittstelle 54 und die Kommunikationsschnittstelle 56 der Steuereinheit 48 zur Verfügung gestellt. Darüber hinaus empfängt die Batteriezelle 10 bis 22 von der Steuereinheit 48 über die Kommunikationsschnittstelle 56 und die Kommunikationsschnittstelle 54 der Batteriezelle 10 bis 22 Steuerbefehle, mittels denen die Halbleiterschalter 62, 64 steuerbar sind. Diese Batteriezellen 10 bis 22 werden auch als Smart-Cell bezeichnet.

Aus Fig. 1 ist ferner ersichtlich, dass jedes der Batteriemodule 24, 26, 28 jeweils eine Entladeeinrichtung 34 umfasst. Die Entladeeinrichtung 34 weist ebenfalls eine Kommunikationsschnittstelle 58 auf, mittels der sie drahtlos über die Kommunikationsschnittstelle 58 mit der Steuereinheit 48 in Kommunikationsverbindung treten kann.

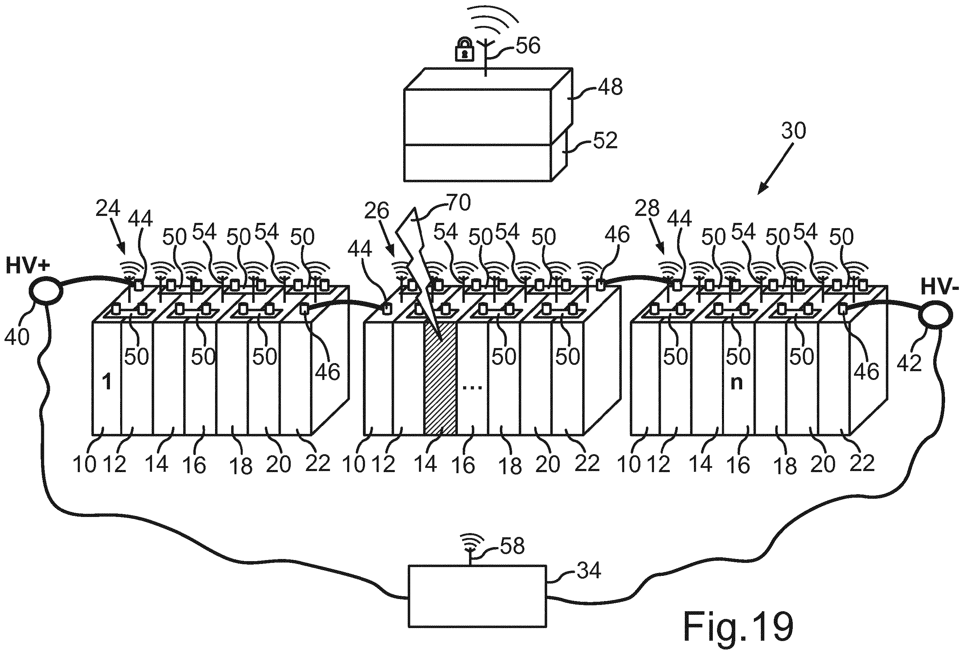

Fig. 19 zeigt eine alternative Ausgestaltung zu Fig. 1, bei der die Entladeeinrichtung 34 nicht modulweise für jedes der Batteriemodule 24, 26, 28 vorgesehen ist, sondern lediglich batterieweise bezogen auf die gesamte Batterie 30. Vorliegend umfasst deshalb die Batterie 30 gemäß Fig. 19 lediglich eine einzige Entladeeinrichtung 34, die an die Batterieanschlusspole 40, 42 angeschlossen ist. Dem Grunde nach unterscheidet sich die Funktion der Entladeeinrichtung 34 gemäß Fig. 19 aber nicht von der der Entladeeinrichtung 34 gemäß Fig. 1, weshalb auf die diesbezüglichen Ausführungen ergänzend verwiesen wird. Ein Unterschied ergibt sich allenfalls durch eine Beaufschlagung mit der elektrischen Spannung an den Batterieanschlusspolen 40, 42 im bestimmungsgemäßen Betrieb, für die die Entladeeinrichtung 34 im bestimmungsgemäßen Betrieb der Batterie 30 ausgelegt sein muss. Jedoch ist die Entladeeinrichtung 34 gemäß Fig. 19 in diesem Betriebszustand deaktiviert. Zur Herstellung einer entsprechenden Spannungsfestigkeit kann deshalb ein elektromechanisches Schaltelement oder auch ein entsprechend geeignetes Halbleiterschaltelement in der Entladeeinrichtung 34 vorgesehen sein, welches eine elektrische Potentialtrennung bereitstellt, wenn die Entladeeinrichtung 34 im bestimmungsgemäßen Betrieb der Batterie 30 nicht benötigt wird. Auch hier wird die Entladeeinrichtung 34 zum vorgesehenen Entladebetrieb einer einzelnen Batteriezelle 10 bis 22 ausgebildet und entsprechend beansprucht.

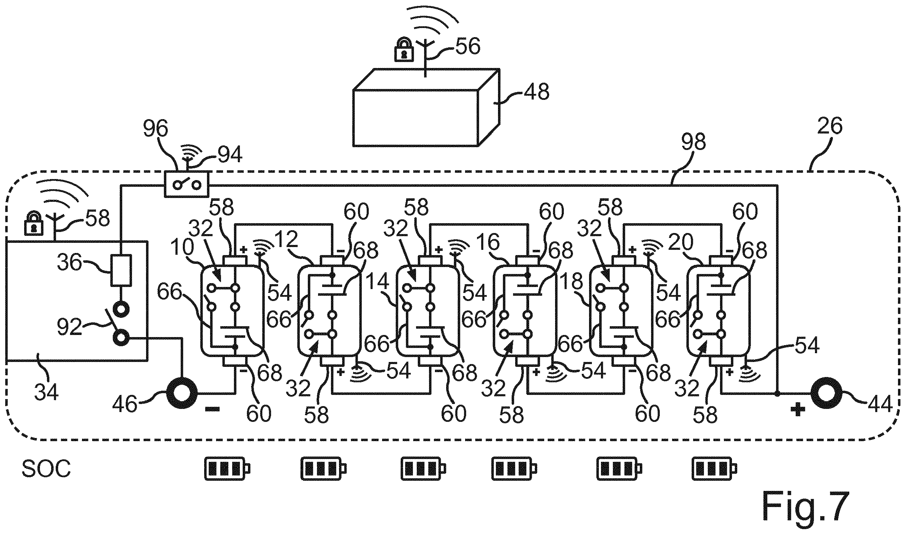

In Fig. 19 ist ferner schematisch dargestellt, dass an einer der Batteriezellen 14 des Batteriemoduls 26 eine Störung 70 auftritt. Die Störung 70 kann mittels der nicht dargestellten Sensoren aufgrund von Zustandsänderungen der Zellenzustände der Batteriezelle 14 erfasst werden. Mittels der Kommunikationseinheit und der Kommunikationsschnittstelle 54 der Batteriezelle 14 können die entsprechenden Daten über die Kommunikationsschnittstelle 56 der Steuereinheit 48 an diese übermittelt werden. Die Steuereinheit 48 verarbeitet die übermittelten Daten der Batteriezelle 14 und führt die erfindungsgemäße Verfahrensführung durch, wie sie im Folgenden anhand der Fig. 7 bis 17 noch weiter erläutert werden wird.

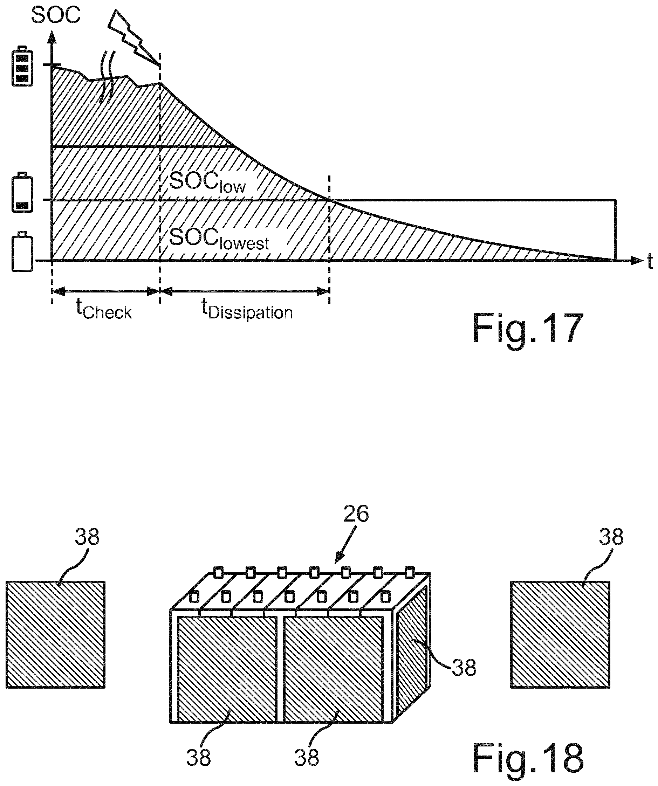

Fig. 18 zeigt in einer schematischen Darstellung ein einzelnes der Batteriemodule der Batterie 30, vorliegend das Batteriemodul 26. Aus Fig. 18 ist ersichtlich, dass das Batteriemodul 26 Kühlflächen 38 aufweist, die mit elektrischen Widerständen 36 der Entladeeinrichtung 34 thermisch gekoppelt sind. Die elektrischen Widerstände 36 sind vorliegend in den Fig. 7 bis 16 durch das Symbol eines elektrischen Widerstands dargestellt. Die Kühlflächen 38 sind an Außenseiten eines nicht weiter dargestellten Gehäuses des Batteriemoduls 26 angeordnet. Die elektrischen Widerstände 36 bilden elektrische Energieverbrauchseinheiten. Die elektrischen Widerstände 36 können vorliegend durch eine Dickfilmtechnik und/oder dergleichen auf die Kühlflächen 38 aufgebracht sein. Die Kühlflächen 38 selbst können durch eine geeignet ausgebildete Metallplatte, beispielsweise eine Aluminiumplatte und/oder dergleichen, gebildet sein.

Neben der Anordnung der Kühlflächen 38 am Batteriemodul 26 können weitere Kühlflächen 38 mit elektrischen Widerständen 36 extern vom Batteriemodul 26 angeordnet sein, bei einem Kraftfahrzeug beispielsweise in einem von Fahrtwind umströmten Bereich oder dergleichen. Dadurch kann eine gute Wärmeabführung beim Entladen des Batteriemoduls erreicht werden. Vorliegend ist vorgesehen, dass sämtliche der Batteriemodule 24, 26, 28 diesbezüglich gleich ausgebildet sind. Natürlich können in alternativen Ausgestaltungen die Batteriemodule auch abweichend voneinander ausgebildet sein.

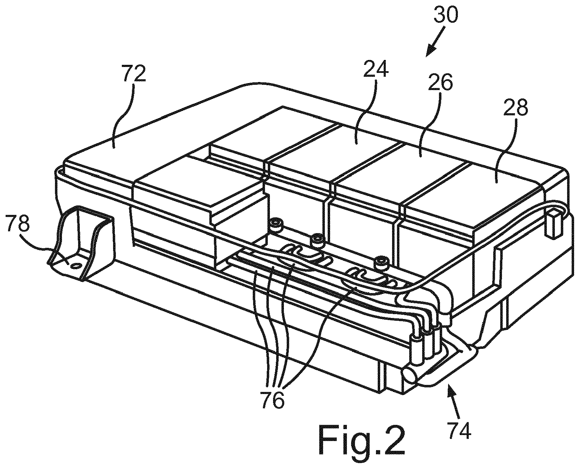

Fig. 2 zeigt eine Ausgestaltung der Batterie 30 gemäß der Fig. 1, 19 in einer schematisch aufgebrochenen perspektivischen Darstellung. Aus Fig. 2 ist ersichtlich, dass die Batterie 30 ein Gehäuse 72 aufweist, welches vorliegend aus Aluminiumguss gebildet ist. In dem Gehäuse 72 sind die Batteriemodule 24, 26, 28 angeordnet sowie auch noch zwei weitere Batteriemodule, die vorliegend nicht bezeichnet sind. Aus Fig. 2 ist ferner ersichtlich, dass im unteren Bereich des Gehäuses 72 eine Kühleinrichtung 74 integriert ist, die Kühlleitungen 76 umfasst. Die Kühlleitungen 76 sind unterhalb der Batteriemodule 24, 26, 28 angeordnet. Sie sind von einem Kühlmittel durchströmt, sodass in den Batteriemodulen 24, 26, 28 auftretende Wärme abgeführt werden kann. In einer nicht weiter dargestellten Wärmetauschereinrichtung wird die mit dem Kühlmittel aus der Batterie 30 entfernte Wärme weiter abgeführt. Nicht dargestellt in Fig. 2 ist ein Anschlussbereich für die Batterie 30 und die Batteriemodule 24, 26, 28. Das Gehäuse 82 der Batterie 30 weist ferner eine Befestigungseinrichtung 78 auf, mittels der die Batterie 30 mit einem Chassis eines elektrisch antreibbaren Kraftfahrzeugs mechanisch verbunden werden kann. Das Kraftfahrzeug selbst ist in den Fig. nicht dargestellt. Da die Erfindung jedoch nicht auf den Einsatz bei elektrisch antreibbaren Kraftfahrzeugen begrenzt ist, sondern ebenso bei stationären Energiespeichereinrichtungen zum Einsatz kommen kann, kann die Verbindungseinrichtung 78 auch zur anderweitigen Verbindung mit stationären Einrichtungen ausgebildet sein. Derartige Einrichtungen können zum Beispiel eine unterbrechungsfreie Energieversorgung, insbesondere in der Signaltechnik, eine Energieversorgung im Inselbetrieb, beispielsweise in der Haustechnik und/oder dergleichen sein. Aber auch für mobile Anwendungen wie zum Beispiel bei elektrisch betreibbaren Laubsaugern, Fahrrädern und/oder dergleichen kann die Erfindung vorteilhaft eingesetzt werden, vorzugswiese überall dort, wo Batteriesysteme zum Einsatz kommen können.

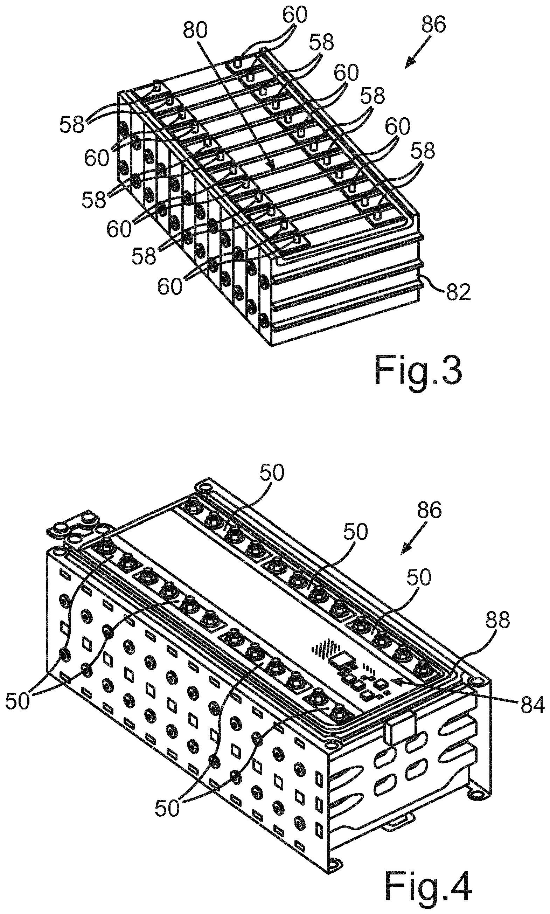

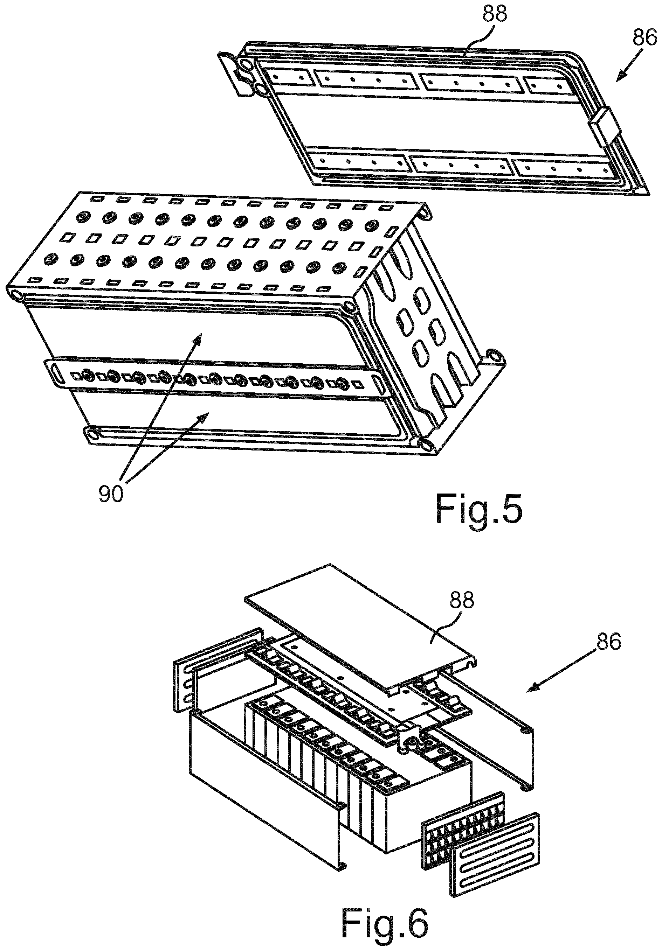

Fig. 3 zeigt in einer schematisch perspektivischen Darstellung exemplarisch stellevertretend für die Batteriemodule 24, 26, 28 das Batteriemodul 86, welches vorliegend zwölf Batteriezellen aufweist. In den Fig. 1, 18, 19 sind der Übersichtlichkeit halber lediglich sieben der Batteriezellen 10 bis 22 dargestellt. Die Erfindung ist jedoch unabhängig von der Anzahl der Batteriezellen in einem Batteriemodul. Die Batteriezellen 10 bis 22 sind vorliegend als prismatische Batteriezellen ausgebildet und weisen eine quaderförmige Bauform auf. Zwischen benachbarten Batteriezellen 10 bis 22 ist jeweils eine Isolierfolie 80 angeordnet. Die Batteriezellen 10 bis 22 sind in einem Rahmen 82 aufgenommen und mechanisch fixiert. An einer Oberseite 84 der Batteriezellen 10 bis 22 sind die entsprechenden Batteriezellenanschlüsse 58, 60 angeordnet. Das Batteriemodul 86 der Fig. 3 selbst ist insgesamt auch wieder quaderförmig ausgebildet. Fig. 4 zeigt in einer schematisch perspektivischen Darstellung das Batteriemodul 86 gemäß Fig. 3, wobei nunmehr entsprechende Stromschienen 50 vorgesehen sind, mittels derer die Batteriezellen des Batteriemoduls 86 in vorgegebener Weise elektrisch verschaltet sind. Zwischen den Stromschienen 50 ist eine Leiterplatte 84 mit der Steuereinheit 48 sowie mit der hier nicht weiter dargestellten Zellenschalteinheit 32 angeordnet, mittels der einerseits Zellenzustände der jeweiligen Batteriezellen 10 bis 22 erfasst und andererseits Zellen 10 bis 22 selektiv aktiviert beziehungsweise deaktiviert werden können. Die Leiterplatte 84 sowie die Stromschienen 50 sind integriert in einem Deckel 88 angeordnet (Fig. 5), der auf einfache Weise lediglich auf die Batteriezellenanschlüsse 58, 60 aufgesetzt und an diesen befestigt ist. Mit dem Deckel 88 wird das Batteriemodul 86 abgedeckt. Auf der Rückseite, gegenüberliegend zum Deckel 88, sind Kühlflächen 90 ausgebildet, die die Kühleinrichtung 74 mit den Kühlleitungen 76 des Gehäuses 72 der Batterie 30 kontaktieren können, um Wärme aus den Batteriezellen 10 bis 22 abführen zu können. Dies ist in einer perspektivischen Darstellung der Unterseite des Batteriemoduls 86 in Fig. 5 dargestellt. Fig. 6 zeigt in einer schematischen Explosionsdarstellung eine alternative Ausgestaltung des Batteriemoduls 86 ebenfalls mit zwölf Batteriezellen, wobei jedoch hier der Deckel 88 nach Art einer Sandwichbauweise aufgebaut ist.

Zur Erläuterung des Entladeverfahrens gemäß der Erfindung gemäß einem weiteren Ausführungsbeispiel sind die Fig. 7 bis 12 vorgesehen. Die Entladung soll anhand des Batteriemoduls 26 erläutert werden, wie es in den Fig. 1, 18 und 19 dargestellt ist. Abweichend vom Batteriemodul 26 in den Fig. 1 und 19 umfasst das Batteriemodul 26 der Fig. 7 lediglich sechs Batteriezellen 10, 12, 14, 16, 18, 20 und nicht die Batteriezelle 22, um die Darstellung und das Verständnis zu erleichtern. Das im folgenden erläuterte Verfahren ist jedoch im Wesentlichen unabhängig von der Anzahl der Batteriezellen in einem Batteriemodul. Das Verfahren ist deshalb ebenso auf das Batteriemodul 26 der Fig. ,1, 18 und 19 mit sieben Batteriezellen 10, 12, 14, 16, 18, 20, 22 sowie der Fig. 3 bis 6 mit zwölf Batteriezellen anwendbar.

Die Batteriezellen 10, 12, 14, 16, 18, 20 der Fig. 7 entsprechen der Batteriezelle 10, wie sie im oberen linken Bereich zur Fig. 1 bereits ausführlich erläutert und dargestellt ist. Diesbezüglich wird ergänzend auf diese Ausführungen verwiesen.

Vorliegend weist das Batteriemodul 26 die sechs Batteriezellen 10, 12, 14, 16, 18, 20 auf, die in Reihe geschaltet sind. Zu diesem Zweck ist der Modulanschlusspol 46 an den Batteriezellenanschluss 60 der Batteriezelle 10 angeschlossen. Der Batteriezellenanschluss 58 der Batteriezelle 10 ist an den Batteriezellenanschluss 60 der Batteriezelle 12 angeschlossen. Weiterhin ist der Batteriezellenanschluss 58 der Batteriezelle 12 an den Batteriezellenanschluss 60 der Batteriezelle 14 angeschlossen. Entsprechend sind die weiteren Batteriezellen angeschlossen, wobei der Batteriezelleanschluss 58 der Batteriezelle 20 an den Modulanschlusspol 44 des Batteriemoduls 26 angeschlossen ist. Im bestimmungsgemäßen Betrieb sind mittels der Zellenschalteinheit 32 des Batteriemoduls 26, die vorliegend in die jeweiligen Batteriezellen 10, 12, 14, 16, 18, 20 entsprechend teilweise integriert ist, die galvanischen Zellen 68 der Batteriezellen 10, 12, 14, 16, 18, 20 in Reihe geschaltet, sodass an den Modulanschlusspolen 44, 46 eine Gleichspannung bereitgestellt wird, die der Summe der durch die galvanischen Zellen 68 bereitgestellten Gleichspannungen entspricht. Unterhalb der Batteriezellen 10, 12, 14, 16, 18, 20 sind symbolisch Ladezustände der jeweiligen Batteriezellen dargestellt. Dies ist in der Fig. 7 mit SOC (State of Charge) bezeichnet.

An den Modulanschlusspolen 44, 46 ist ferner eine Entladeeinrichtung 34 des Batteriemoduls 26 über ein steuerbares elektromechanisches Schaltelement 96 und eine Leitung 98 angeschlossen. Das elektromechanische Schaltelement 96 ist optional für Erfindung und braucht nicht zwingend vorgesehen zu sein, weil die Schaltfunktion als solche bereits auch mit einem Halbleiterschalter 92 der Entladeeinrichtung 34 realisiert werden kann. Das elektromechanische Schaltelement 96 erlaubt es jedoch, zusätzliche Anforderungen, beispielsweise in Bezug auf die elektrische Sicherheit und/oder dergleichen, besser realisieren zu können. Das Schaltelement 96 weist eine Kommunikationsschnittstelle 94 auf, mittels welcher es von der Steuereinheit 48 über die Schnittstelle 56 steuerbar ist. Mittels des Schaltelements 96 kann somit die Entladeeinrichtung 34 zum Zwecke des Entladens des Batteriemoduls 26 aktiviert werden. Das Schaltelement 96 ist vorliegend durch einen MOSFET gebildet. Es aber auch durch ein anderes geeignetes Bauteil gebildet sein.

Die Entladeeinrichtung 34 umfasst vorliegend einen elektrischen Widerstand 36, wie er zuvor bereits erläutert worden ist. Dieser ist in Reihe geschaltet zu dem Halbleiterschalter 92, hier auch ein MOSFET, sodass mittels des Halbleiterschalters 92 bei ebenfalls aktiviertem Schaltelement 96 das jeweilige Entladen einer der Batteriezellen 10, 12, 14, 16, 18, 20 ausgeführt werden kann. Die Entladeeinrichtung 34 ist vorliegend mittels einer eigenen Steuereinheit, die in den Fig. nicht dargestellt ist, derart gesteuert, dass die jeweils zu entladende Batteriezelle bis zu einem vorgegebenen unteren Ladungszustand entladen wird. Wird dieser Ladungszustand erreicht, wird der Entladungsvorgang beendet. Zu diesem Zweck kann vorgesehen sein, dass der Halbleiterschalter 92 in den geöffneten Zustand geschaltet wird.

Im in der Fig. 7 dargestellten Betriebszustand kann das Batteriemodul 26 hinsichtlich der Energiespeicherfunktion im bestimmungsgemäßen Betrieb betrieben werden. Das Batteriemodul 26 ist aktiviert.

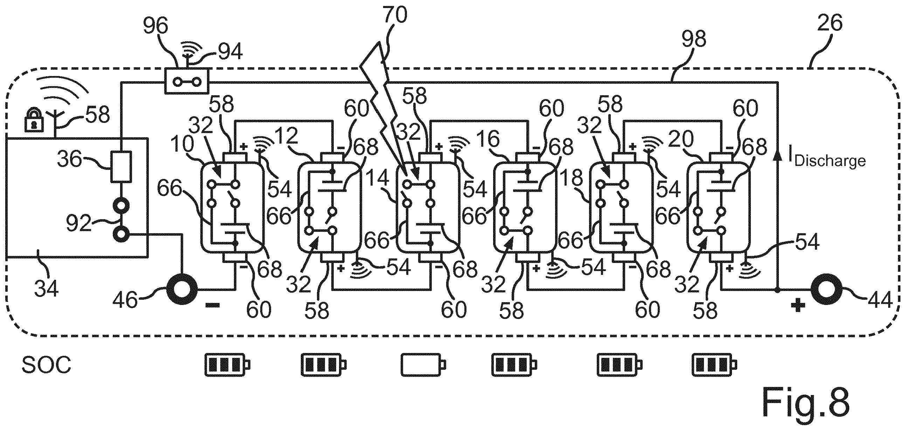

Fig. 8 zeigt eine Darstellung wie in Fig. 7, bei der jedoch in der Batteriezelle 14 eine Störung 70 auftritt. Mittels in der Batteriezelle 14 angeordneter Sensoren wird diese Störung 70 erkannt und über die Kommunikationsschnittstelle 54 an die Kommunikationsschnittstelle 56 der Steuereinheit 48 an diese übermittelt. Die Steuereinheit 48 erkennt den gestörten Zustand 70 der Batteriezelle 14 und übermittelt Steuerbefehle für die Schalteinheit 32 der weiteren Batteriezellen 10, 12, 16, 18, 20. Diese schalten ihre jeweiligen galvanischen Zellen mittels der Halbleiterschalter 62 ab, die in den geöffneten Zustand geschaltet werden. Zugleich werden die Halbleiterschalter 64 geschlossen, sodass die jeweilige Bypass-Leitung der Batteriezellen 10, 12, 16, 18, 20 aktiviert wird. Dadurch liegt nunmehr über die jeweiligen Bypass-Leitungen 66 die Batteriezelle 14 mit ihren Batteriezellenanschlüssen 58, 60 unmittelbar an den Modulanschlusspolen 44, 46 an.

Die Steuereinheit 48 übermittelt ferner einen Steuerbefehl zum Schließen des Schaltelements 96 über die Kommunikationsschnittstelle 56 und die Kommunikationsschnittstelle 94. Daraufhin wird das Schaltelement 96 geschlossen. Somit ist die Entladeeinrichtung 34 zum Entladen aktiviert an die Modulanschlusspole 44, 46 des Batteriemoduls 26 aktiviert.

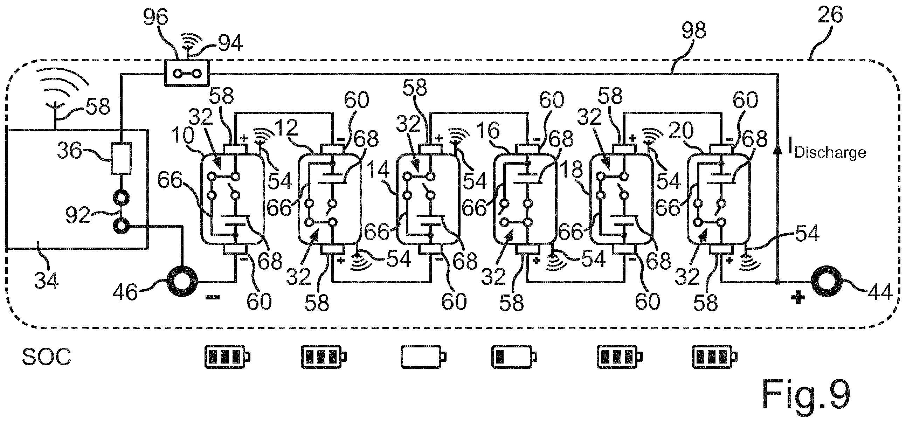

Die Steuereinheit übermittelt dann ein Entladesignal an die Entladeeinrichtung 34, woraufhin der Halbleiterschalter 92 geschlossen wird. Dadurch wird nunmehr die in der Batteriezelle 14 noch vorhandene Energie entnommen und dem elektrischen Widerstand 36 zugeführt, der die zugeführte elektrische Energie in Wärme umwandelt. Wie bereits oben erläutert, wird diese Wärme über die Kühlflächen 38 des Batteriemoduls 26 abgegeben. Sobald die Batteriezelle 14 den entladenen Zustand erreicht hat, wird der Halbleiterschalter 62 der Batteriezelle 14 geöffnet und stattdessen der Halbleiterschalter 64 der Batteriezelle 14 geschlossen. Dadurch wird die Bypass-Leitung 66 der Batteriezelle 14 aktiviert (Fig. 9). In der Folge wird dann der Halbleiterschalter 64 der Batteriezelle 16 geöffnet und stattdessen der Halbleiterschalter 62 der Batteriezelle 16 geschlossen. Dadurch wird die unmittelbar benachbart angeordnete Batteriezelle 16 nunmehr an die Modulanschlusspole 44, 46 geschaltet, sodass die Batteriezelle 16 mittels der Entladeeinrichtung 34 entladen wird, wie zuvor bereits die Batteriezelle 14. Die Entladung erfolgt hier bis zu einem vorgegebenen unteren Ladungszustand.

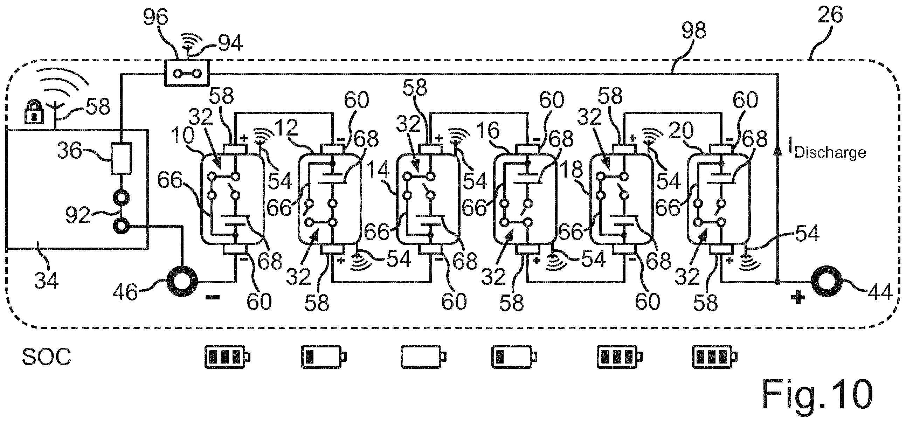

Ist die Batteriezelle 16 entladen, wird deren Halbleiterschalter 62 geöffnet und stattdessen der Halbleiterschalter 64 geschlossen, sodass die Bypass-Leitung 66 der Batteriezelle 16 aktiviert wird. Darüber hinaus wird nunmehr bei der Batteriezelle 12 der Halbleiterschalter 64 geöffnet und der Halbleiterschalter 62 geschlossen, sodass deren galvanische Zelle 68 nunmehr an die Modulanschlusspole 44, 46 angeschlossen ist. Dadurch wird nunmehr die Batteriezelle 12 mittels der Entladeeinrichtung 34 - wie bereits zuvor die Batteriezellen 14 und 16 - entladen (Fig. 10).

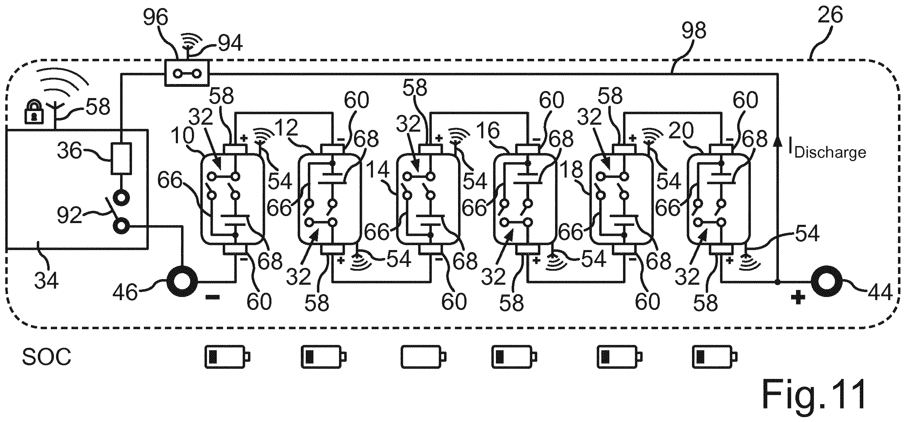

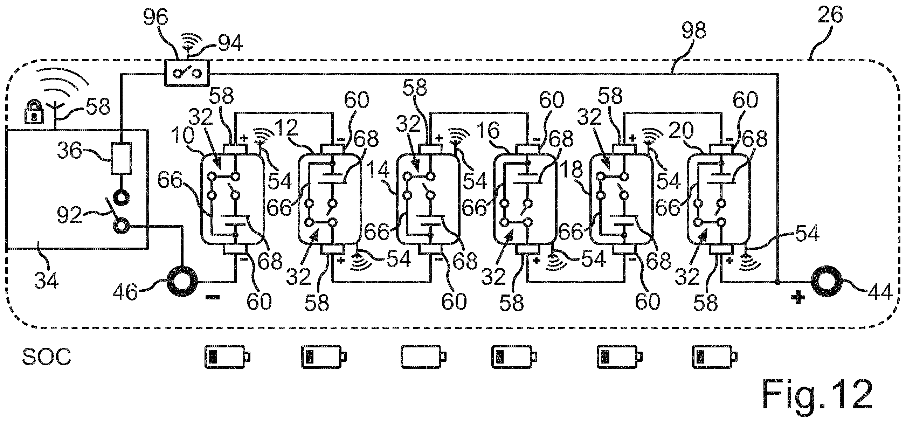

Nach dem vorgenannten Schema werden auch die weiteren verbliebenen Batteriezellen 10, 18, 20 entladen (Fig. 11). Sind die Batteriezellen 10 bis 20 entladen, wird der Halbleiterschalter 92 der Entladeeinrichtung 34 geöffnet. Sämtliche Halbleiterschalter 62, 64 der Batteriezellen 10 bis 20 sind ebenfalls im geöffneten Zustand. Lediglich das Schaltelement 96 ist noch im geschlossenen Zustand (Fig. 11). Mittels eines letzten Steuerbefehls der Steuereinheit 48 wird nunmehr auch das Schaltelement 96 in den geöffneten Zustand geschaltet. Damit ist das Batteriemodul 26 entladen und auch deaktiviert. Dadurch, dass rechtzeitig eine Störung in einer der Batteriezellen 10, 12, 14, 16, 18, 20 ermittelt werden konnte, konnte durch unmittelbares sequentielles Entladen verhindert werden, dass ein gefährlicher Zustand für das Batteriemodul 26 und infolgedessen auch für Batterie 30 eintreten konnte. Die Batterie 30 kann nun dadurch wieder instandgesetzt werden, dass das Batteriemodul 26 mit der defekten Batteriezelle 14 als handhabbare Baueinheit ausgetauscht wird. Dadurch kann die Batterie 30 auf einfache Weise gewartet beziehungsweise repariert werden. Gegebenenfalls kann auch ein Notbetrieb realisiert werden, indem die Bypass-Leitungen 66 der Batteriezellen 10 bis 20 aktiviert werden. Dieser Zustand ist in Fig. 12 dargestellt.

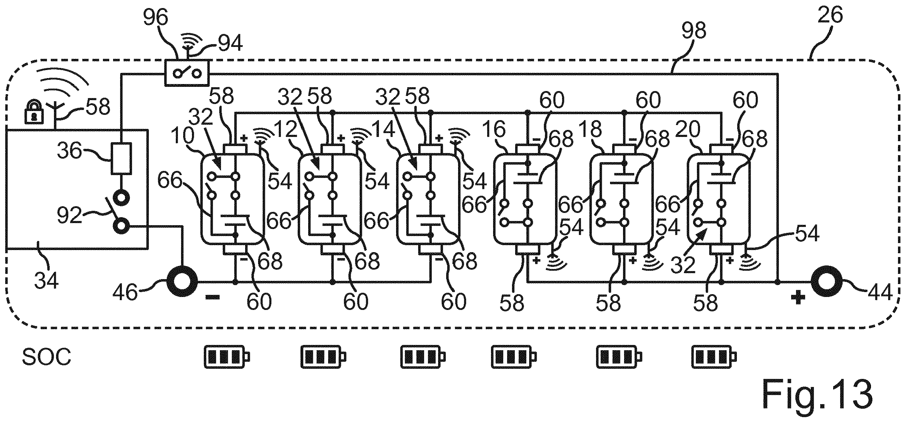

Fig. 13 zeigt eine weitere Ausgestaltung gemäß der Erfindung, bei der das Batteriemodul 26 hier eine abweichende Verschaltung gegenüber dem Batteriemodul 26 der Fig. 7 bis 12 aufweist. Bei Fig. 13 ist in Abweichung hierzu vorgesehen, dass die Batteriezellen 10 bis 14 ebenso wie die Batteriezellen 16 bis 20 jeweils parallelgeschaltet sind. Die jeweils parallelgeschalteten Batteriezellen sind ihrerseits wieder in Reihe geschaltet an die Modulanschlusspole 44, 46 angeschlossen. Ansonsten entspricht der Aufbau des Batteriemoduls 26 dem des Batteriemoduls 26 der Fig. 7 bis 12, weshalb ergänzend diesbezüglich auf diese Ausführungen verwiesen wird.

Fig. 13 zeigt einen betriebsbereiten Zustand des Batteriemoduls 26. Im Unterschied zum Ausführungsbeispiel gemäß der Fig. 7 bis 12 liefert das Batteriemodul 26 gemäß Fig. 13 lediglich ein Drittel der Spannung an den Modulanschlusspolen 44, 46, weil jeweils drei der Batteriezellen 10, 12, 14 beziehungsweise 16, 18, 20 parallelgeschaltet sind. Hierdurch ergeben sich bezüglich der Durchführung des erfindungsgemäßen Verfahrens zum sequentiellen Entladen der Batteriezellen Besonderheiten, die im Folgenden erläutert werden sollen.

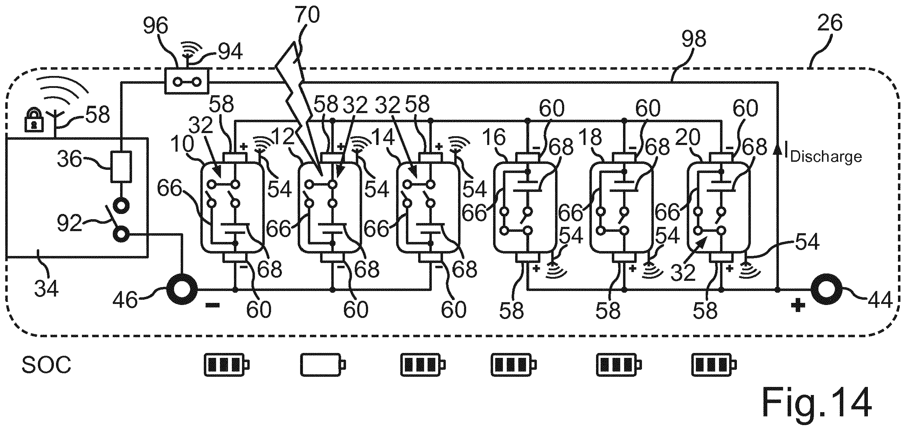

Im Ausführungsbeispiel gemäß Fig. 14 ist nunmehr die Batteriezelle 12 von einer Störung 70 betroffen. Die Verfahrensführung sieht in diesem Fall vor, dass aufgrund der Parallelschaltung der Batteriezellen 10, 12, 14 die Halbleiterschalter 62, 64 der Batteriezellen 10, 14 in den geöffneten Zustand geschaltet werden. Dadurch sind deren galvanische Zellen 68 vom elektrischen Stromkreis des Batteriemoduls 26 entkoppelt. Die weiteren Batteriezellen 16, 18, 20 werden derart mittels der Steuereinheit 48 gesteuert, dass deren Halbleiterschalter 62 in den geöffneten Zustand schaltet, wohingegen deren Halbleiterschalter 64 in den geschlossenen Zustand geschaltet wird. Dadurch sind die Bypass-Leitungen der Batteriezellen 16, 18, 20 aktiviert, wie beim vorhergehenden Beispiel bezüglich der Fig. 7 bis 12. An den Modulanschlusspolen 44, 46 liegt nunmehr die Batteriezelle 12 mit ihren Batteriezelleanschlüssen 58, 60 an. Mittels der Entladeeinrichtung 34 kann nun die Batteriezelle 12, wie im vorhergehenden Beispiel erläutert, entladen werden. Ist die Batteriezelle 12 entladen, erfolgt die weitere Vorgehensweise derart, dass zunächst die Batteriezelle 14 und dann die Batteriezelle 10 entladen werden, die unmittelbar benachbart zur Batteriezelle 12 angeordnet sind. Erst, wenn die Batteriezellen 10, 12, 14 entladen sind, erfolgt die weitere Entladung der Batteriezellen 16, 18, 20 sequentiell, wie bereits zuvor erläutert. Also auch hier kann trotz Parallelschaltung von Batteriezellen eine Einzelzellentladung gemäß der Erfindung realisiert werden.

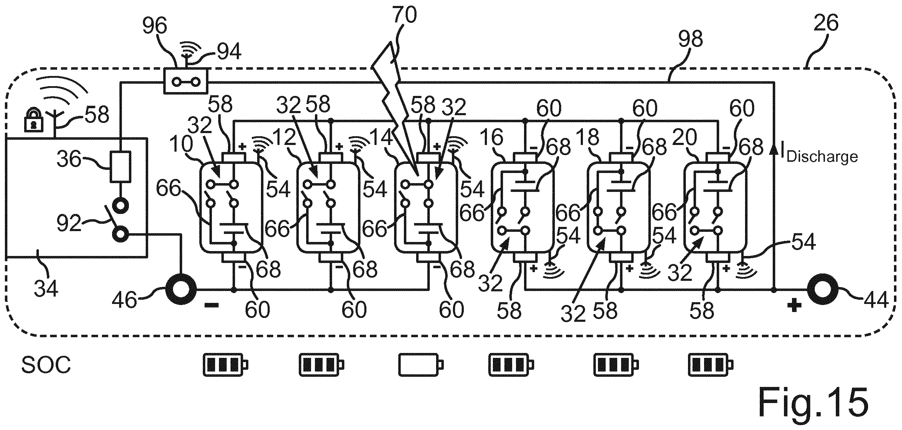

Fig. 15 zeigt eine weitere Ausgestaltung der erfindungsgemäßen Verfahrensführung, wobei dieses Ausführungsbeispiel auf dem Ausführungsbeispiel der Fig. 14 basiert. Deswegen wird ergänzend auf die Ausführungen zum Ausführungsbeispiel gemäß Fig. 14 verwiesen. Abweichend vom Ausführungsbeispiel zur Fig. 14 ist nunmehr bei dem Ausführungsbeispiel gemäß Fig. 15 eine Störung 70 an der Batteriezelle 14 aufgetreten. Das Batteriemodul ist ansonsten identisch zu dem der Fig. 14. Ein Unterschied ergibt sich hinsichtlich der Verfahrensführung dahingehend, dass nach Entladung der Batteriezelle 14 als vorgegebener Batteriezelle zunächst die Batteriezelle 12 und dann im Anschluss die zur Batteriezelle 14 ebenfalls benachbart angeordnete Batteriezelle 16 entladen wird. Erst dann erfolgt einzeln sequentiell nacheinander die Entladung der Batteriezellen 10, 18, 20.

Die Erfindung entlädt grundsätzlich also die Batteriezellen des Batteriemoduls 26 nicht willkürlich nacheinander, sondern aufgrund einer ermittelten Dringlichkeit. Die ermittelte Dringlichkeit ergibt sich dadurch, dass eine der Batteriezellen einen gestörten Zustand einnimmt, der mittels der Steuereinheit ermittelt werden kann. Dadurch wird die vorgegebene Batteriezelle festgelegt, von der ausgehend das erfindungsgemäße Entladeverfahren ausgeführt wird. Die vorgegebene Batteriezelle wird als erste mittels der Entladeeinrichtung entladen. Danach folgt nach einem vorgegebenen Schema die Entladung der weiteren Batteriezellen. Durch dieses Vorgehen kann erreicht werden, dass die gefährlichsten Zustände beziehungsweise Batteriezellen zuerst entladen werden, um die gefährlichen Zustände reduzieren oder vermeiden zu können. Aus diesem Grund wird gemäß einer Ausgestaltung der Erfindung auch vorgeschlagen, dass nach der Entladung der vorgegebenen Batteriezelle zunächst benachbart angeordnete Batteriezellen entladen werden, um den Herd der Störung energietechnisch zuerst zu entschärfen.

Bei dem Ausführungsbeispiel der Fig. 15 ist ferner vorgesehen, dass die unmittelbar benachbarten Zellen 12, 16 durch Öffnen ihrer Halbleiterschalter 62, 64 vollständig deaktiviert werden. Dadurch können die möglicherweise durch die Batteriezelle 14 beaufschlagten Batteriezellen 12, 16 zunächst vollständig vom elektrischen Schaltkreis deaktiviert werden, damit eine Schadenswirkung weitgehend vermieden werden kann. Der Anschluss der Batteriezelle 14 an die Modulanschlusspole 44, 46 wird über die Bypass-Leitungen der Batteriezellen 18, 20 bewirkt.

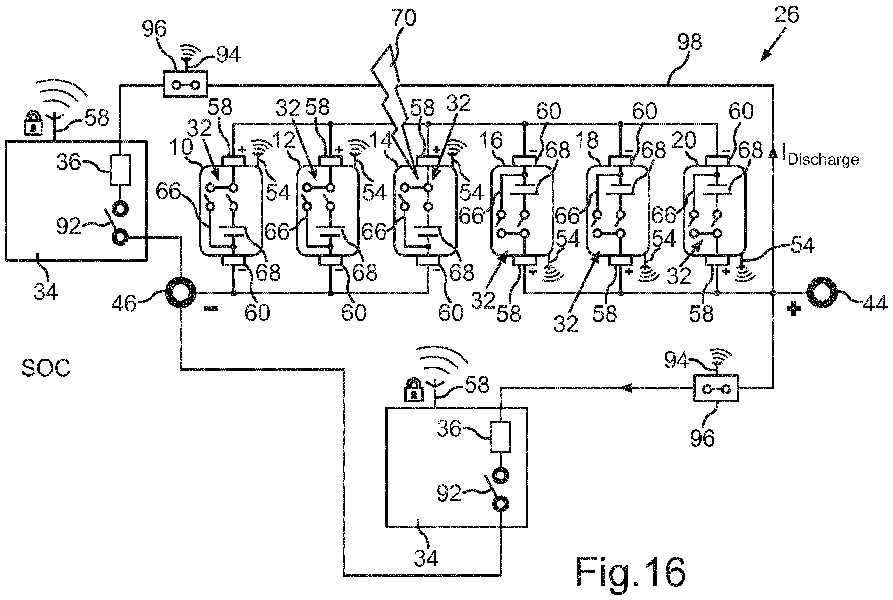

Fig. 16 zeigt eine weitere Ausgestaltung der Erfindung auf Basis des Ausführungsbeispiels gemäß Fig. 15, wobei im Unterschied zum Ausführungsbeispiel gemäß Fig. 15 bei dem Ausführungsbeispiel gemäß Fig. 16 eine zweite Entladeeinrichtung 34 vorgesehen ist, die parallel wie die erste Entladeeinrichtung 34 der Fig. 15 an die Modulanschlusspole 44, 46 angeschlossen ist. Dadurch kann eine erhöhte Entladegeschwindigkeit bezüglich der Batteriezellen 10, 12, 14, 16, 18, 20 und somit letztendlich auch des Batteriemoduls 26 erreicht werden. Darüber hinaus kann die abzuführende Wärme auf eine größere Wärmesenke verteilt werden, um freigesetzte Wärmeenergie lokal zu verteilen, vorzugsweise derart, dass sie von der defekten Batteriezelle entfernt wird. Hierzu ist vorzugsweise ein Abstand zur Wärmesenke möglichst groß gewählt.

Fig. 17 zeigt in einem schematischen Diagramm eine Darstellung bezüglich der Einschätzung der Gefährlichkeit eines Ladungszustands einer Batteriezelle in einem Störungsfall. Als Abszisse ist eine Zeitachse vorgesehen. Die Ordinate gibt einen momentanen Ladungszustand einer ausgewählten Batteriezelle wieder, beispielsweise der Batteriezelle 10. Durch die insbesondere als Smart Cell ausgebildete Zelle kann mittels der übergeordneten Smart-Safety-Detection-Unit und deren Früherkennungssysteme, insbesondere in Bezug auf ein Langzeitverhalten der Batteriezelle, innerhalb eines Zeitraums, der in Fig. 17 mit t_{check} bezeichnet ist, eine kontinuierliche Überwachung beziehungsweise Beobachtung der Batteriezellen beziehungsweise der Batteriemodule erfolgen. Falls ein möglicher gefährlicher Zellenzustand aufgrund eines Trends oder einer Situation erkannt wird, kann mithilfe einer oder mehrerer verteilter Entladeeinrichtungen beziehungsweise Smart-Power-Dissipation-Units innerhalb eines Zeitrahmens, der in Fig. 17 mit t_{dissipation} bezeichnet ist, versucht werden, die Batteriezellen des betroffenen Batteriemoduls, insbesondere auch deren Nachbarzellen, wie oben erläutert, auf einen möglichst ungefährlichen Ladungszustand in möglichst kurzer Zeit kontrolliert einzustellen. In Fig. 17 ist der ungefährliche Ladungszustand mit SOC_{low} gekennzeichnet. Ein Ladungszustand, der diesen Wert unterschreitet, wird vorliegend als ungefährlich angesehen. Die Zeit t_{dissipation} ist eine Funktion der Leistungsfähigkeit der Entladeeinrichtung. Die dabei abzuführende elektrische Energie kann sich dabei auf eine oder mehrere Entladeeinrichtungen verteilen und wird dort vorzugsweise in Wärme umgesetzt. Über ein Kühlsystem für die gesamte Batterie oder auch mithilfe eines entsprechenden Not-Kühlsystems kann die freigesetzte Wärme auch individuell abgeführt werden. Zusätzlich kann von der Steuereinheit in Abhängigkeit der aktuellen Situation die jeweilige Entladeeinrichtung angesteuert werden, damit die abzuführende elektrische Energie nicht als zusätzliche Heizquelle auf die Problembatteriezelle einwirken kann. Dadurch kann eine zusätzliche Verstärkung des Problems der gestörten Batteriezelle vermieden werden. Auch wenn mehrere Batteriezellen gleichzeitig Störungen aufweisen sollten, könnten mit dem Ablauf der Erfindung gleichzeitig mehrere Batteriemodule zum Beispiel über mehrere verteilte Entladeeinrichtungen in den ungefährlichen beziehungsweise sicheren Betriebszustand überführt werden. Besonders vorteilhaft erweist es sich, dass mit der Erfindung ein Zeitgewinn erreicht werden kann, um frühzeitig Störzustände erfassen zu können, insbesondere einen Forcast für die Batteriezellen ermöglichen zu können und als gestört erfasst Batteriezellen möglichst frühzeitig aus dem Betrieb als Energiespeicher herausnehmen, um einen gefährlichen Zustand für das Batteriemodul und/oder die Batterie insgesamt vermeiden zu können.

Die Entladeeinrichtungen 34 können an allen Seiten des Batteriemoduls 26 angeordnet sein, selbst auf der Unterseite beziehungsweise über den Modulanschlusspolen 44, 46. Zudem ist es denkbar, die Entladeeinrichtungen 34 an einem fernab vom Batteriemodul 26 befindlichen Ort anzuordnen und diese jeweils elektrisch mit einem oder mehreren der Batteriemodule 24, 26, 28 zu verbinden und vor Ort für eine entsprechende Entwärmung zu sorgen. Es ist nicht erforderlich, sämtliche Batteriemodule 24, 26, 28 der Batterie 30 in einen Brückenmodus zu schalten. Das Batteriemodul 26 mit der Störung kann, wie oben erläutert, entladen werden.

Im einfachsten Fall besteht eine Entladeeinrichtung gemäß der Erfindung aus einem elektrischen Widerstand 36 und einem fernsteuerbaren Schaltelement wie dem Halbleiterschalter 92 sowie aus zwei Anschlüssen, die in den vorangehenden Ausführungsbeispielen jedoch nicht bezeichnet sind. Der elektrische Widerstand kann zum Beispiel aus einer mit einem Kühlmedium durchströmbaren Keramikplatte mit einer aufgedampften mäanderförmigen Metallschicht oder aus ähnlichem bestehen.

Insgesamt ergeben sich durch die Erfindung die folgenden Vorteile:
- intelligentes, smartes, programmierbares und dynamisch anpassbares, hochintegriertes System;
- großer Gewinn an Sicherheit, selbst bei Verwendung einer aggressiven Batteriezellchemie;
- die Erfindung ist nicht nur auf automotive Anwendungen begrenzt, sondern sie kann auch bei stationären Energiespeichern eingesetzt werden;
- es wird ein Smart-Safety-Modul mit einer aktiven Überwachung und einem Früherkennungssystem (Smart-Safety-Detection-System) und einem oder mehreren verteilten leistungsfähigen Energievernichtungssystemen, und zwar den Entladeeinrichtungen (Smart-Power-Dissipation-Units) zur Reduzierung eines Gefährlichkeitspegels geschaffen, mit denen eine Tiefentladung realisiert werden kann;
- permanente Überwachung aller Batteriezellen der Batterie;
- Minimierung der Risiken bei Verwendung aggressiver Batteriezellchemien, insbesondere bei zukünftigen Batteriezellen mit sehr großen Energiedichten;
- Einsatz intelligenter Früherkennungssysteme, insbesondere für Forecast;
- direktes und spontanes Reagieren des Gesamtsystems aus Batteriemodulen und Batteriezellen bei individuellen Änderungen einzelner Batteriezellen;
- Ableitung von Präventivmaßnahmen zur Erhöhung der Gesamtsicherheit der Batterie;
- adaptive Anpassung zur Senkung der Risiken mittels intelligenter Software bei dynamischen Veränderungen aller Art, beispielsweise Alterung (State of Health, SOH), Unfall, Temperaturproblemen, Schnellladen sowie auch schleichende Fehler, wie beispielsweise interne Kurzschlüsse durch Mikropartikel und/oder dergleichen;
- Absenkung des Ladungszustands der betroffenen Batteriezelle und deren Nachbarbatteriezellen, einschließlich des gesamten Batteriemoduls, falls notwendig sogar der gesamten Batterie, beispielsweise bei einem Unfall, auf einen ungefährlichen Ladungspegel zur Minimierung der Gefahr bei einem drohenden Fehlerfall;
- Überbrückung von schadhaften Modulen beziehungsweise Batteriezellen durch eine Brückenfunktion, wodurch ein Weiterbetrieb beziehungsweise ein Notbetrieb realisiert werden kann. Bei einem Kraftfahrzeug kann dadurch zum Beispiel die Fahrt bis zu einer Werkstatt ermöglicht werden.
- Selbst bei einem Gesamtbatteriesystem kann mit einer zentralen Smart-Power-Dissipation-Unit eine Entwärmung in kurzer Zeit angestoßen werden, beispielsweise durch Betrieb einer Klimaanlage, eines PTC und/oder dergleichen.
- Eine oder mehrere Smart-Power-Dissipation-Units können direkt in ein Batteriemodul integriert werden und über intelligente Ansteuerung thermodynamisch optimiert betrieben werden.
- Die Erfindung eignet sich auch zum passiven Balancieren der Batteriezellen und Batteriemodule (Brückenfunktion + schaltbare Batteriezellen + Smart-Power-Dissipation-Unit).
Temperieren von Batteriezellen und Batteriemodulen.

Die Ausführungsbeispiele dienen lediglich der Erläuterung der Erfindung und beschränken diese nicht. Die für das erfindungsgemäße Verfahren angegebenen Wirkungen und Vorteile sowie Ausgestaltungen gelten gleichermaßen für die mit der Erfindung erfasste Entladeeinrichtung, Batterie und Kraftfahrzeug sowie umgekehrt. Entsprechend können für Verfahrensmerkmale auch entsprechende Vorrichtungsmerkmale und umgekehrt vorgesehen sein.

## Patentansprüche

1. Verfahren zum Entladen von einem wenigstens zwei Batteriezellen (10, 12, 14, 16, 18, 20, 22) aufweisenden Batteriemodul (24) einer wenigstens zwei Batteriemodule (24, 26, 28) aufweisenden Batterie (30), wobei die Batteriezellen (10, 12, 14, 16, 18, 20, 22) eines jeweiligen der Batteriemodule (24, 26, 28) benachbart zueinander angeordnet und mechanisch und elektrisch miteinander verbunden sind, wobei bei jedem der Batteriemodule (24, 26, 28) die jeweiligen Batteriezellen (10, 12, 14, 16, 18, 20, 22) einzeln mittels einer Zellenschalteinheit (32) in einem ersten Schaltzustand der Zellenschalteinheit (32) hinsichtlich einer Energiespeicherfunktion aktiviert und in einem zweiten Schaltzustand der Zellenschalteinheit (32) hinsichtlich der Energiespeicherfunktion deaktiviert werden,
**gekennzeichnet durch**
selektives elektrisches Koppeln der Batteriezellen (10, 12, 14, 16, 18, 20, 22) des zu entladenden Batteriemoduls (24, 26, 28) nacheinander mit einer Entladeeinrichtung (34) mittels der Zellenschalteinheit (32) ausgehend von einer vorgegebenen der Batteriezellen (14), um die Batteriezellen (10, 12, 14, 16, 18, 20, 22) zum vollständigen Entladen des Batteriemoduls (24, 26, 28) einzeln nacheinander elektrisch zu entladen.

2. Verfahren nach Anspruch 1,
**dadurch gekennzeichnet, dass**
zumindest die Batteriezellen (10, 12, 14, 16, 18, 20, 22) des zu entladenden Batteriemoduls (24, 26, 28) der Batterie (30) mittels der Zellenschalteinheit (32) vor einem Beginn des Entladens deaktiviert werden.

3. Verfahren nach Anspruch 1 oder 2,
**dadurch gekennzeichnet, dass**
für die Batteriezellen (10, 12, 14, 16, 18, 20, 22) des Batteriemoduls (24, 26, 28) jeweils ein Zustandswert für einen Zellenzustand erfasst wird, für die erfassten Zustandswerte ermittelt wird, ob sie in einem vorgegebenen Wertebereich sind, und eine Batteriezelle (10, 12, 14, 16, 18, 20, 22), deren erfasster Zustandswert außerhalb des Wertebereichs ist, als die vorgegebene Batteriezelle (14) ermittelt wird.

4. Verfahren nach Anspruch 3,
**dadurch gekennzeichnet, dass**
das Entladen durch das Ermitteln der vorgegebenen Batteriezelle (14) gestartet wird.

5. Verfahren nach einem der vorhergehenden Ansprüche,
**dadurch gekennzeichnet, dass**
bei einem mehr als zwei Batteriezellen (10, 12, 14, 16, 18, 20, 22) aufweisenden Batteriemodul (24, 26, 28) eine Reihenfolge des Entladens der Batteriezellen (10, 12, 14, 16, 18, 20, 22) unter Berücksichtigung eines räumlichen Abstands der Batteriezellen (10, 12, 16, 18, 20, 22) zur vorgegeben Batteriezelle (14) festgelegt wird.

6. Verfahren nach Anspruch 5,
**dadurch gekennzeichnet, dass**
die Reihenfolge des Entladens der Batteriezellen (10, 12, 14, 16, 18, 20, 22) ergänzend abhängig von der erfassten Zustandsgröße der Batteriezellen (10, 12, 16, 18, 20, 22) in Bezug auf den vorgegebenen Wertebereich festgelegt wird.

7. Verfahren nach einem der vorhergehenden Ansprüche,
**dadurch gekennzeichnet, dass**,
wenn die Entladeeinrichtung (34) an Batterieanschlusspole der Batterie (30) angeschlossen ist, das zu entladende Batteriemodul (24, 26, 28) mittels der Zellenschalteinheiten (32) der Batteriemodule (24, 26, 28) selektiv mit den Batterieanschlusspolen elektrisch gekoppelt wird.

8. Verfahren nach einem der vorhergehenden Ansprüche,
**dadurch gekennzeichnet, dass**
das Entladen einer jeweiligen der Batteriezellen (10, 12, 14, 16, 18, 20, 22) des zu entladenden Batteriemoduls (24, 26, 28) bis zu einem vorgegebenen unteren Ladungszustand erfolgt.

9. Batterie (30) mit zwei Batterieanschlusspolen (40, 42) und wenigstens zwei Batteriemodulen (24, 26, 28), wobei jedes der Batteriemodule (24, 26, 28) jeweils zwei Modulanschlusspole (44, 46) aufweist, über die die Batteriemodule (24, 26, 28) miteinander elektrisch verbunden und an die Batterieanschlusspole (40, 42) angeschlossen sind, wobei jedes der Batteriemodule (24, 26, 28) wenigstens zwei benachbart zueinander angeordnete Batteriezellen (10, 12, 14, 16, 18, 20, 22) aufweist, die mechanisch und elektrisch miteinander verbunden und an die jeweiligen Modulanschlusspole (44, 46) angeschlossen sind, wobei jedes der Batteriemodule (24, 26, 28) eine mittels einer Steuereinheit (48) steuerbare Zellenschalteinheit (32) zum einzelnen Aktivieren der jeweiligen Batteriezellen (10, 12, 14, 16, 18, 20, 22) in einem ersten Schaltzustand hinsichtlich einer Energiespeicherfunktion und einzelnen Deaktivieren der jeweiligen Batteriezellen (10, 12, 14, 16, 18, 20, 22) in einem zweiten Schaltzustand hinsichtlich der Energiespeicherfunktion umfasst, **dadurch gekennzeichnet, dass**
die Steuereinheit (48) ausgebildet ist, zum Entladen von einem der Batteriemodule (24, 26, 28) dessen Batteriezellen (10, 12, 14, 16, 18, 20, 22) ausgehend von einer vorgegebenen der Batteriezellen (14) mittels der Zellenschalteinheit (32) nacheinander mit einer Entladeeinrichtung (34) selektiv elektrisch zu koppeln, um die Batteriezellen (10, 12, 14, 16, 18, 20, 22) zum vollständigen Entladen des Batteriemoduls (24, 26, 28) einzeln nacheinander elektrisch zu entladen.

10. Kraftfahrzeug mit einer elektrischen Antriebseinheit zum Antreiben des Kraftfahrzeugs sowie einer Batterie (30), die an die elektrische Antriebseinheit angeschlossen ist,
**dadurch gekennzeichnet, dass**
die Batterie (30) nach Anspruch 9 ausgebildet ist.

## Claims

1. Method for discharging a battery module (24) having at least two battery cells (10, 12, 14, 16, 18, 20, 22) of a battery (30) having at least two battery modules (24, 26, 28), wherein the battery cells (10, 12, 14, 16, 18, 20, 22) of each of the respective battery modules (24, 26, 28) are arranged adjacent to one another and are connected mechanically and electrically to one another, wherein in each of the battery modules (24, 26, 28) the respective battery cells (10, 12, 14, 16, 18, 20, 22) are activated individually by means of a cell switching unit (32) in a first switching state of the cell switching unit (32) with respect to an energy storage function and are deactivated in a second switching state of the cell switching unit (32) with respect to the energy storage function,
**characterised by**
selective electrical coupling of the battery cells (10, 12, 14, 16, 18, 20, 22) of the battery module (24, 26, 28) to be discharged in succession with a discharge device (34) by means of the cell switching unit (32), starting from a predefined battery cell (14), in order to individually electrically discharge the battery cells (10, 12, 14, 16, 18, 20, 22) in succession for completely discharging the battery module (24, 26, 28).

2. Method according to claim 1,
**characterised in that**
at least the battery cells (10, 12, 14, 16, 18, 20, 22) of the battery module (24, 26, 28) of the battery (30) to be discharged are deactivated before starting the discharge by means of the cell switching unit (32).

3. Method according to claim 1 or 2,
**characterised in that**
for the battery cells (10, 12, 14, 16, 18, 20, 22) of the battery module (24, 26, 28) respectively a state value is detected for a cell state; it is determined for the detected state values whether they are within a predefined value range, and a battery cell (10, 12, 14, 16, 18, 20, 22), the detected state value of which is outside of the value range, is determined as the predefined battery cell (14).

4. Method according to claim 3,
**characterised in that**
the discharge is started by determining the predefined battery cell (14).

5. Method according to any of the preceding claims,
**characterised in that**
with a battery module (24, 26, 28) having more than two battery cells (10, 12, 14, 16, 18, 20, 22) a sequence of discharging the battery cells (10, 12, 14, 16, 18, 20, 22) is specified taking into consideration a spatial distance of the battery cells (10, 12, 14, 16, 18, 20, 22) from the predefined battery cell (14).

6. Method according to claim 5,
**characterised in that**
the sequence of discharging the battery cells (10, 12, 14, 16, 18, 20, 22) is specified additionally depending on the detected state variable of the battery cells (10, 12, 14, 16, 18, 20, 22) with reference to the predefined value range.

7. Method according to any of the preceding claims,
**characterised in that**
when the discharge device (34) is connected to battery terminals of the battery (30), the battery module (24, 26, 28) to be discharged is selectively coupled electrically to the battery terminals by means of the cell switching units (32) of the battery modules (24, 26, 28).

8. Method according to any of the preceding claims,
**characterised in that**
the discharge of a respective battery cell (10, 12, 14, 16, 18, 20, 22) of the battery module (24, 26, 28) to be discharged is performed down to a predefined lower charging state.

9. Battery (30) with two battery terminals (40, 42) and at least two battery modules (24, 26, 28), wherein each of the battery modules (24, 26, 28) has two module terminals (44, 46) respectively, by means of which the battery modules (24, 26, 28) are electrically connected to one another and are connected to the battery terminals (40, 42), wherein each of the battery modules (24, 26, 28) has at least two battery cells (10, 12, 14, 16, 18, 20, 22) arranged adjacent to one another, which are mechanically and electrically connected to one another and are connected to the respective module terminals (44, 46), wherein each of the battery modules (24, 26, 28) comprises a cell switching unit (32), controllable by means of a control unit (48) for individually activating the respective battery cells (10, 12, 14, 16, 18, 20, 22) in a first switching state with respect to an energy storage function and for individually deactivating the respective battery cells (10, 12, 14, 16, 18, 20, 22) in a second switching state with respect to the energy storage function,
**characterised in that**
the control unit (48) is designed to selectively electrically couple with a discharge device (34) in succession by means of the cell switching unit (32), in order to discharge one of the battery cells (10, 12, 14, 16, 18, 20) of the battery modules (24, 26, 28), starting from a predefined battery cell (14), in order to individually electrically discharge the battery cells (10, 12, 14, 16, 18, 20, 22) in succession to completely discharge the battery module (24, 26, 28).

10. Motor vehicle with an electric drive unit for driving the motor vehicle and a battery (30) which is connected to the electric drive unit,
**characterised in that**
the battery (30) is designed according to claim 9.

## Revendications

1. Procédé permettant de décharger un module de batterie (24), présentant au moins deux éléments de batterie (10, 12, 14, 16, 18, 20, 22), d'une batterie (30) présentant au moins deux modules de batterie (24, 26, 28), dans lequel les éléments de batterie (10, 12, 14, 16, 18, 20, 22) d'un respectif des modules de batterie (24, 26, 28) sont disposés au voisinage les uns des autres et sont reliés mécaniquement et électriquement les uns aux autres, dans lequel, pour chacun des modules de batterie (24, 26, 28), les éléments de batterie (10, 12, 14, 16, 18, 20, 22) respectifs sont activés individuellement au moyen d'une unité de commutation d'élément (32) dans un premier état de commutation de l'unité de commutation d'élément (32) en termes de fonction d'accumulation d'énergie et désactivés dans un second état de commutation de l'unité de commutation d'élément (32) en termes de fonction d'accumulation d'énergie,
**caractérisé par**
le couplage électrique sélectif des éléments de batterie (10, 12, 14, 16, 18, 20, 22) du module de batterie (24, 26, 28) à décharger les uns après les autres avec un dispositif de décharge (34) au moyen de l'unité de commutation d'élément (32) à partir d'un prédéfini des éléments de batterie (14), afin de décharger électriquement les éléments de batterie (10, 12, 14, 16, 18, 20, 22) individuellement les uns après les autres pour la décharge complète du module de batterie (24, 26, 28).

2. Procédé selon la revendication 1,
**caractérisé en ce que**
au moins les éléments de batterie (10, 12, 14, 16, 18, 20, 22) du module de batterie (24, 26, 28) à décharger de la batterie (30) sont désactivés au moyen de l'unité de commutation d'élément (32) avant un début de la décharge.

3. Procédé selon la revendication 1 ou 2,
**caractérisé en ce que**
pour les éléments de batterie (10, 12, 14, 16, 18, 20, 22) du module de batterie (24, 26, 28), respectivement une valeur d'état pour un état d'élément est acquise, il est déterminé pour les valeurs d'état acquises si elles sont dans une plage de valeurs prédéfinies, et un élément de batterie (10, 12, 14, 16, 18, 20, 22), dont la valeur d'état acquise est à l'extérieur de la plage de valeurs, est déterminé comme l'élément de batterie (14) prédéfini.

4. Procédé selon la revendication 3,
**caractérisé en ce que**
la décharge est démarrée par la détermination de l'élément de batterie (14) prédéfini.

5. Procédé selon l'une quelconque des revendications précédentes,
**caractérisé en ce que**
pour un module de batterie (24, 26, 28) présentant plus de deux éléments de batterie (10, 12, 14, 16, 18, 20, 22), un ordre de décharge des éléments de batterie (10, 12, 14, 16, 18, 20, 22) est défini avec prise en compte d'une distance spatiale des éléments de batterie (10, 12, 14, 16, 18, 20, 22) par rapport à l'élément de batterie (14) prédéfini.

6. Procédé selon la revendication 5,
**caractérisé en ce que**
l'ordre de décharge des éléments de batterie (10, 12, 14, 16, 18, 20, 22) est défini en plus en fonction de la grandeur d'état acquise des éléments de batterie (10, 12, 16, 18, 20, 22) par rapport à la plage de valeurs prédéfinies.

7. Procédé selon l'une quelconque des revendications précédentes,
**caractérisé en ce que**
lorsque le dispositif de décharge (34) est raccordé aux pôles de raccordement de batterie de la batterie (30), le module de batterie (24, 26, 28) à décharger est couplé électriquement de manière sélective aux pôles de raccordement de batterie au moyen des unités de commutation d'élément (32) des modules de batterie (24, 26, 28).

8. Procédé selon l'une quelconque des revendications précédentes,
**caractérisé en ce que**
la décharge d'un respectif des éléments de batterie (10, 12, 14, 16, 18, 20, 22) du module de batterie (24, 26, 28) à décharger s'effectue jusqu'à un état de charge inférieur prédéfini.

9. Batterie (30) avec deux pôles de raccordement de batterie (40, 42) et au moins deux modules de batterie (24, 26, 28), dans laquelle chacun des modules de batterie (24, 26, 28) présente respectivement deux pôles de raccordement de module (44, 46), par l'intermédiaire desquels les modules de batterie (24, 26, 28) sont reliés électriquement les uns aux autres et raccordés aux pôles de raccordement de batterie (40, 42), dans laquelle chacun des modules de batterie (24, 26, 28) présente au moins deux éléments de batterie (10, 12, 14, 16, 18, 20, 22) disposés au voisinage l'un de l'autre, qui sont reliés mécaniquement et électriquement l'un à l'autre et raccordés aux pôles de raccordement de module (44, 46) respectifs, dans laquelle chacun des modules de batterie (24, 26, 28) comprend une unité de commutation d'élément (32) pouvant être commandée au moyen d'une unité de commande (48) pour l'activation individuelle des éléments de batterie (10, 12, 14, 16, 18, 20, 22) respectifs dans un premier état de commutation en termes de fonction d'accumulation d'énergie et pour la désactivation individuelle des éléments de batterie (10, 12, 14, 16, 18, 20, 22) respectifs dans un deuxième état de commutation en termes de fonction d'accumulation d'énergie,
**caractérisée en ce que**
l'unité de commande (48) est réalisée, pour la décharger d'un des modules de batterie (24, 26, 28), pour coupler électriquement de manière sélective les éléments de batterie (10, 12, 14, 16, 18, 20, 22) de celui-ci à partir d'un prédéfini des éléments de batterie (14) au moyen de l'unité de commutation d'élément (32) les uns après les autres avec un dispositif de décharge (34), afin de décharger électriquement les éléments de batterie (10, 12, 14, 16, 18, 20, 22) les uns après les autres individuellement pour la décharge complète du module de batterie (24, 26, 28).

10. Véhicule à moteur avec une unité d'entraînement électrique pour l'entraînement du véhicule à moteur ainsi qu'une batterie (30), qui est raccordée à l'unité d'entraînement électrique,
**caractérisé en ce que**
la batterie (30) est réalisée selon la revendication 9.
